# EUROPEAN PATENT APPLICATION

(11) **EP 3 816 958 A1**
(43) Date of publication of application: **05.05.2021**
(21) Application number: 19825580.4
(22) Date of filing: 12.06.2019
(51) Int. Cl.: G08C 15/00, G06F 13/00, H04M 11/00, H04Q 9/00

(54) **INFORMATION PROCESSING DEVICE, INFORMATION PROCESSING METHOD, AND PROGRAM**

(30) Priority: 28.06.2018 JP 2018123580
(71) Applicant: Sony Corporation, 108-0075 Tokyo (JP)
(72) Inventor: KIMURA, Ryota, Tokyo 108-0075 (JP)
(74) Representative: 2SPL Patentanwälte PartG mbB
(86) International application number: PCT/JP2019/023249
(87) International publication number: WO 2020/004033

(57) **Abstract**

A data collection is optimized dynamically corresponding to a network load.

An information processing apparatus (gateway) of the present technology is configured to allow intercommunication between a server and a sensor via a network. The information processing apparatus includes a communication section (communication section 19) and a control section (CPU 11). The communication section transmits a setting parameter of the sensor to the sensor, receives sensing data of the sensor sensed on the basis of the setting parameter, and transmits the sensing data to the server. The control section determines whether or not processing of the sensing data is necessary before the sensing data received from the sensor is transmitted to the server (S2006).

## Description

### Technical Field

The present technology relates to an information processing apparatus, an information processing method, and a program.

### Background Art

Patent Literature 1 describes a so-called "event-driven type" processing in which, when an event such as an accident occurs image data is transmitted from an in-vehicle device to a server.

Patent Literature 2 and Patent Literature 3 describe a proxy server that performs high-speed access to a cache by using a hash index in the technical field of the proxy server.

### Citation List

### Patent Literature

Patent Literature 1: Japanese Patent Application Laid-open No. 2016-192598
Patent Literature 2: Japanese Patent Application Laid-open No. 2002-373106
Patent Literature 3: Japanese Patent Application Laid-open No. 2002-373107

### Disclosure of Invention

### Technical Problem

In a system called "Internet of Things" (IoT), a huge number of nodes are expected to connect to a network as end devices. The IoT is well suited for a data collection. However, in a case where the IoT is mounted by employing a system configuration as described in Patent Literature 1, for example, there is no intermediate processing between the in-vehicle device and the server. Therefore, if the number of nodes increases, a load on the network is large, and there is a problem that data traffic increases rapidly when the event occurs.

In view of the above circumstances, it is an object of the present technology to provide an information processing apparatus, an information processing method, and a program for optimizing the data collection dynamically corresponding to a network load.

### Solution to Problem

An embodiment of the present technology for achieving the object is an information processing apparatus.

The information processing apparatus is configured to allow intercommunication between a server and a sensor via a network.

The information processing apparatus includes a communication section and a control section.

The communication section transmits a setting parameter of the sensor to the sensor, receives sensing data of the sensor sensed on the basis of the setting parameter, and transmits the sensing data to the server.

The control section determines whether or not processing of the sensing data is necessary before the sensing data received from the sensor is transmitted to the server.

According to the information processing apparatus, since the information processing apparatus serving as an intermediate node in a system including the server, the information processing apparatus, and the sensor determines whether or not the processing of the sensing data is necessary, and the load on the processing of the sensing data is not concentrated on the server, the data collection can be optimized dynamically corresponding to the network load.

In the information processing apparatus, the control section may be configured to determine whether or not the processing of the sensing data is necessary before the sensing data is transmitted to the server depending on the sensing data.

According to the above-described configuration, since it determines whether or not the processing of the sensing data such as compression and averaging is necessary on the basis of information and a state in response to the sensing data (information such as outside temperature and radio state intensity, and situation in which a traffic accident occurs, but is not limited thereto), accuracy of the sensing data is not lowered in an important situation.

In the information processing apparatus, the communication section may be configured to transmit the setting parameter for initial setting or resetting to the sensor when receiving a connection request from the sensor to the information processing apparatus.

According to the above-described configuration, since the information processing apparatus transmits the setting parameter to the sensor at receiving timing of the connection request such as handover from the sensor, a smooth information collection is facilitated.

In the information processing apparatus, a plurality of the sensors is included, and the control section may be configured to update the setting parameter in response to a change in the number and density of a plurality of mobile bodies on which the sensors are placed.

According to the above-described configuration, information collection will be possible immediately in response to the change in the number of sensors placed on the mobile body and its dense state.

In the information processing apparatus, the communication section may be configured to select a manner of transmitting the setting parameter to the sensor from the manner of transmitting at least including a unicast manner and a broadcast manner depending on a type of the setting parameter.

According to the above-described configuration, depending on the type of the setting parameter, it becomes possible to apply the same parameter to many sensors connecting to the information processing apparatus and to apply individual parameter to each sensor. It enables flexible distribution of the setting parameter, and it is also possible to dynamically respond to the change in the load of the network and the server.

In the information processing apparatus, the control section may be configured to compress the sensing data by a hash function in a case where the sensing data is processed.

According to the above-described configuration, since the compression by the one-way hash function has a good compression ratio, the load on the network and the server is reduced.

Other embodiment of the present technology for achieving the object is an information processing method, including:
configuring an information processing apparatus so as to intercommunicate between a server and a sensor via a network;
transmitting a setting parameter of the sensor to the sensor;
receiving sensing data of the sensor sensed on the basis of the setting parameter;
determining whether or not processing of the sensing data received from the sensor is necessary; and
transmitting the sensing data to the server.

An embodiment of the present technology for achieving the object is a program executed by a computer, the program causing the computer to execute:
a step of configuring the computer so as to intercommunicate between a server and a sensor via a network;
a step of transmitting a setting parameter of the sensor to the sensor;
a step of receiving sensing data of the sensor sensed on the basis of the setting parameter;
a step of determining whether or not processing of the sensing data received from the sensor is necessary; and
a step of transmitting the sensing data to the server.

### Advantageous Effects of Invention

As described above, according to the present technology, it is possible to provide an information processing apparatus, an information processing method, and a program for optimizing data collection dynamically corresponding to a network load.

Note that the effect described here is not necessarily limitative, and any of the effects described in the present disclosure may be provided. Brief Description of Drawings
[Fig. 1] Fig. 1 is a conceptual diagram of a network configuration of a system according to a first embodiment.
[Fig. 2] Fig. 2 is a configuration example of a gateway and the like included in the system according to the above-described embodiment.
[Fig. 3] Fig. 3 is a diagram for explaining an outline of an overall operation of the above-described embodiment.
[Fig. 4] Fig. 4 is a first diagram for explaining a setting phase in the above-described embodiment.
[Fig. 5] Fig. 5 is a diagram for explaining collected data in the above-described embodiment.
[Fig. 6] Fig. 6 is a diagram for explaining a collection frequency in the above-described embodiment.
[Fig. 7] Fig. 7 is a second diagram for explaining the setting phase in the above-described embodiment.
[Fig. 8] Fig. 8 is an example of a processing procedure (server) of a parameter setting of the above-described embodiment.
[Fig. 9] Fig. 9 shows an example of a processing procedure (gateway) of the parameter setting according to the above-described embodiment.
[Fig. 10] Fig. 10 is an example of a processing procedure (sensor) of the parameter setting of the above-described embodiment.
[Fig. 11] Fig. 11 is a first diagram for explaining an operation phase in the above-described embodiment.
[Fig. 12] Fig. 12 is a diagram showing a specific example of sensing data in the above-described embodiment.
[Fig. 13] Fig. 13 is a second diagram for explaining the operation phase in the above-described embodiment.
[Fig. 14] Fig. 14 shows an example of a processing procedure (sensor) of data collection according to the above-described embodiment.
[Fig. 15] Fig. 15 is an example of a sensor collection data format in the above-described embodiment.
[Fig. 16] Fig. 16 is a third diagram for explaining the operation phase in the above-described embodiment.
[Fig. 17] Fig. 17 is a diagram showing a specific example of processed sensing data in the above-described embodiment.
[Fig. 18] Fig. 18 is a diagram showing a hash tree constructed by processing (compression) in the above-described embodiment.
[Fig. 19] Fig. 19 is a diagram showing a specific example of a data format of a hash configured by processing (compression) in the above-described embodiment.
[Fig. 20] Fig. 20 is an example of a processing procedure (gateway) of data collection according to the above-described embodiment.
[Fig. 21] Fig. 21 shows an example of a procedure of the data collection process (server) in the above-described embodiment.
[Fig. 22] Fig. 22 is a diagram for explaining an outline of a method of reproducing data on the basis of a hash tree in a server of the above-described embodiment.
[Fig. 23] Fig. 23 is a diagram for explaining a utilization phase in the above-described embodiment.
[Fig. 24] Fig. 24 is an example of a data analysis result by the server of the above-described embodiment.
[Fig. 25] Fig. 25 is an example of a processing procedure (sensor) of the utilization phase in the above-described embodiment.
[Fig. 26] Fig. 26 is a an example of the processing procedure (server) of the utilization phase in the above-described embodiment.
[Fig. 27] Fig. 27 is a diagram for explaining an outline of an overall operation of a second embodiment.
[Fig. 28] Fig. 28 is an example of a processing procedure of the sensor in the above-described embodiment.
[Fig. 29] Fig. 29 is an example of a processing procedure of the gateway in the above-described embodiment.
[Fig. 30] Fig. 30 shows an example of the processing procedure of the server in the above-described embodiment.
[Fig. 31] Fig. 31 is a diagram for explaining an outline of an overall operation of a third embodiment.
[Fig. 32] Fig. 32 is an example of a processing procedure of the sensor in the above-described embodiment.
[Fig. 33] Fig. 33 is an example of a processing procedure of the gateway in the above-described embodiment.
[Fig. 34] Fig. 34 is an example of a processing procedure of the server in the above-described embodiment.
[Fig. 35] Fig. 35 is a first diagram for explaining a setting phase in a fourth embodiment.
[Fig. 36] Fig. 36 is a second diagram for explaining the setting phase in the above-described embodiment.
[Fig. 37] Fig. 37 is an example of a processing procedure of the gateway according to a fifth embodiment.

### Mode(s) for Carrying Out the Invention

Hereinafter, an embodiment of the present disclosure will be described with reference to the drawings.

The embodiments of the present technology will be described in the following order.
1. First embodiment
   1.1. Entire system
   1.2. Configuration of server, gateway, and sensor
   1.3. Description of the overall operation
   1.4. Setting phase
   1.4.1. Overview of setting phase
   1.4.2. Details of setting phase
   1.5. Operation phase
   1.5.1. Sensor data collection process
   1.5.2. Gateway data collection process
   1.5.3. Server data collection process
   1.6. Utilization phase
2. Second Embodiment
3. Third embodiment
4. Fourth embodiment
5. Fifth embodiment
6. Other Embodiment
7. Appendix

### 1. First embodiment

In the present embodiment, an IoT device in an IoT system is shown as an example of a sensor, and an in-vehicle sensor (in-vehicle device) is shown as a further example of the IoT device, but the sensor is not limited to the present embodiment.

In the present embodiment, as an example of an information processing apparatus, a base station in a wireless data communication system (hereinafter, mainly referred to as "gateway") is shown, but the information processing apparatus is not limited to the present embodiment.

In the present embodiment, as an example of a server, a so-called cloud server that physically includes a plurality of server groups is shown, but the server is not limited to the present embodiment.

In the present embodiment, as an example of collected data, a state of various wireless communication environments (radio wave strength, etc.) of the in-vehicle device is assumed, but the present technology is not limited to the present embodiment.

### 1.1. Entire system

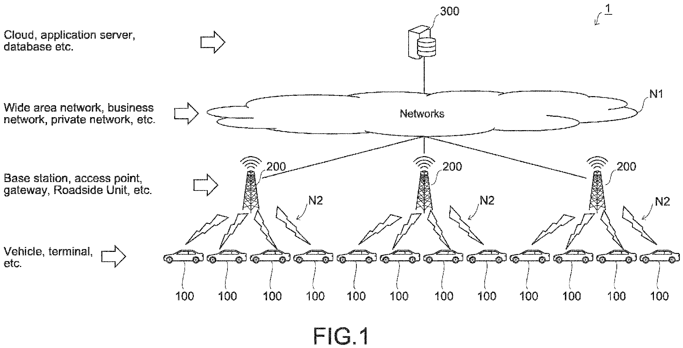

Referring to Fig. 1, there is shown a conceptual diagram of a configuration of an entire system according to the present embodiment. As shown in Fig. 1, an entire system 1 includes a server 300, a plurality of gateways 200, and a plurality of sensors 100.

Each network N is configured to allow intercommunication between a cloud (server 300) and the gateway 200, between the gateway 200 and the sensor 100, between the cloud (server 300) and the sensor 100. Incidentally, the gateway 200 may also have a function of the sensor 100.

The network N is a generic term for a network of the present embodiment including a network N1 and a network N2. A physical layer, a data link layer, and the like of the network N are not limited. By way of example, the Internet, a cellular telephone communication network (including MNO (Mobile Network Operator) network and MVNO (Mobile Virtual Network Operator) network), a network according to various wireless local area network standards, a short-range wireless communication (including Bluetooth) and the like can be utilized as the network of the present embodiment. The network N can utilize a wide area network, a business network, a private networks, etc.

In a system having a configuration similar to that of the system 1, if the number of sensors increases, there is a possibility that a network congestion may occur, or a processing load on a gateway or a server that obtains data from the sensors may be imposed.

### 1.2. Configuration of server, gateway, and sensor

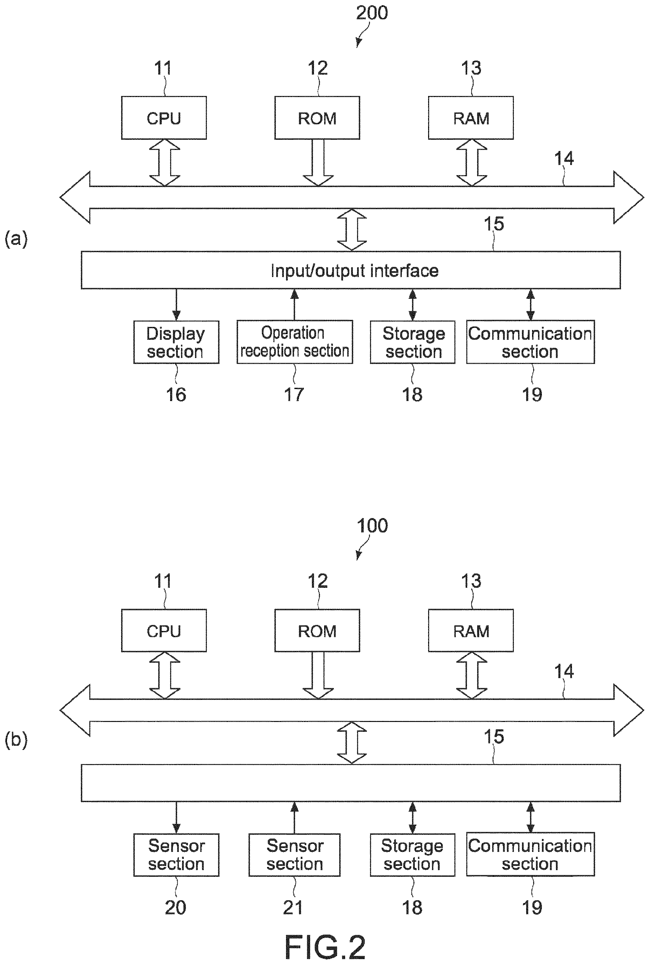

Referring to Fig. 2, there is shown a conceptual diagram of a configuration of a gateway and the like according to the present embodiment. As shown in Fig. 2(a), the gateway 200 has a configuration similar to that of a general-purpose computer. Specifically, the gateway 200 includes a CPU (Central Processing Unit) 11, a ROM (Read Only Memory) 12, a RAM (Random Access Memory) 13, an input/output interface 15, and a bus 14 that connects them to each other.

The CPU 11 appropriately accesses the RAM 13 or the like as necessary and integrally controls entire respective blocks while performing various types of arithmetic processing. The ROM 12 is a non-volatile memory in which an operating system (OS) to be executed by the CPU 11 and firmware such as a program and various parameters is fixedly stored. The RAM 13 is used as a work area or the like of the CPU 11 and temporarily stores the OS, various applications being executed, and various types of data being processed.

Furthermore, the CPU 11 constitutes a control section of the present apparatus by loading a software program stored in the ROM 12.

A display section 16, an operation reception section 17, a storage section 18, a communication section 19, and the like are connected to the input/output interface 15. The display section 16 is a display device using, for example, an LCD (Liquid Crystal Display), an OELD (Organic Electro-Luminescence Display), or a CRT (Cathode Ray Tube). The operation reception section 17 is, for example, a pointing device such as a mouse, a keyboard, or other input device. Incidentally, the display section 16 and the operation reception section 17 may be grouped together by a liquid crystal touch panel.

The storage section 18 is a non-volatile memory such as an HDD (Hard Disk Drive), a flash memory (SSD; Solid State Drive), and other solid-state memory. The OS, various applications, and various types of data described above are stored in the storage section 18.

The communication section 19 is one of various modules for wireless communication such as an NIC (Network Interface Card) and a wireless LAN. The communication section 19 enables transmission and reception of data between the present apparatus and other apparatuses.

The configuration shown in Fig. 2(a) is an example of the configuration of the gateway 200, and other elements may be added, and a part thereof may be omitted. The server 300 and the sensor 100 may have the same configuration as the gateway 200. Other elements may be added to the configuration of the server 300 and the sensor 100, and a part thereof may be omitted.

Fig. 2(b) shows a configuration example of the sensor 100. A description of portions common to those in Fig. 2(a) is omitted. The sensor 100 has a sensor section 20 and a sensor section 21. In this case, the sensor 100 which can accumulate two types of sensing data is exemplified. Specific examples of the sensor section 20 and the sensor section 21 include, for example, a camera, a human sensor, an antenna capable of evaluating radio wave intensity and radio wave quality of the wireless communication and the like. However, the present embodiment is not intended to limit the sensor 100.

### 1.3. Description of overall operation

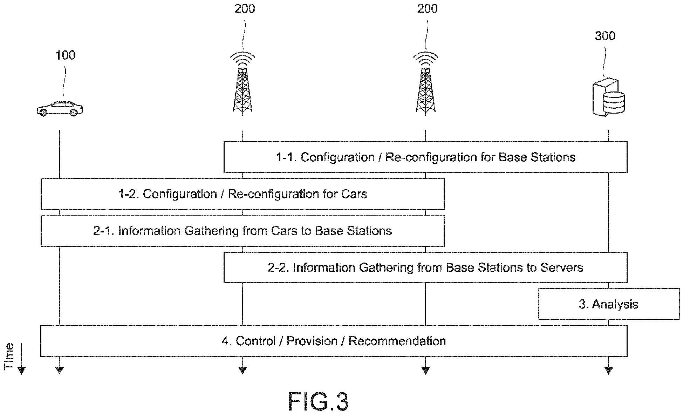

Referring to Fig. 3, there is shown a conceptual diagram for explaining an outline of an overall operation of the system 1 according to the present embodiment. As shown in Fig. 3, the plurality of gateways 200 may be intermediate nodes located between the sensor 100 and the server 300, and may have a multilayer structure in which any one of the gateways 200 is located above the other gateway 200.

Before an operation of the system 1, the server 300 makes a setting of each gateway 200 (1-1 in Fig. 3). Each gateway 200 makes a setting of the sensor 100 on the basis of the setting made by the server 300 to each gateway 200 (1-2 in Fig. 3). Up to this point is a setting phase.

Next, the sensor 100 transmits sensed information to each gateway 200. Each gateway 200 collects the information from the sensor 100 (2-1 in Fig. 3). Each gateway 200 transmits collected information or processed information to the server 300. The server 300 collects the information from each gateway 200 (2-2 in Fig. 3). Up to this point is an operation phase.

The server 300 performs an analysis or the like on the basis of the collected information, and feeds back to resetting, control, or the like of each gateway 200 and the sensor 100 (3, 4 in Fig. 3). Up to this point is a utilization phase.

In the setting phase, as to the setting of the sensor 100, the information regarding the setting transmitted by the server 300 to each gateway 200 may be used as it is or may be generated on the basis of the setting received by each gateway 200 from the server 300. In both cases, it is common that setting parameters of the sensor 100 come from the server 300.

Although not shown in Fig. 3, in the system 1 according to the present embodiment, it also allows that the server 300 directly sets the sensor 100 and that the information is transmitted directly from the sensor 100 to the server 300.

The sensing data and the like of the sensor 100 are mostly handled by an application layer. The application layer only specifies End-to-End, and the nodes (intermediate nodes) in the middle are usually transparent. In the present embodiment, the gateway 200, which is an intermediate node, collects and processes the sensing data of the sensor 100 in the operation phase.

Considering that a very large number of sensor devices, such as the IoT, connect to the network, an exchange of End-to-End data will occur between the respective sensors 100 and the server 300. An increased access to the server 300 and an increased network load become problems.

In the present embodiment, the network load is reduced by the gateway 200. In particular, when the network N1 is a wired network and the network N2 is a wireless network, it is advantageous to use the base station, which is a boundary between the wireless network and the wired network, as the gateway 200 of the present embodiment, in consideration of the fact that the sensing data is highly location-dependent, but the configuration is not limited thereto.

### 1.4. Setting phase

### 1.4.1. Overview of setting phase

The setting phase is divided into two stages: a setting process from the server 300 to the gateway 200, and a setting process from the gateway 200 to the sensor 100.

In the present embodiment, the server 300 sets the sensor 100 with respect to the gateway 200 of the intermediate node as to which data items the sensor 100 transmits to the server 300 in which mode (with processing, with no processing, etc.) and how frequently. As a result, a data collection can be optimized even when the network load changes, e.g. when the number of sensors 100 increases.

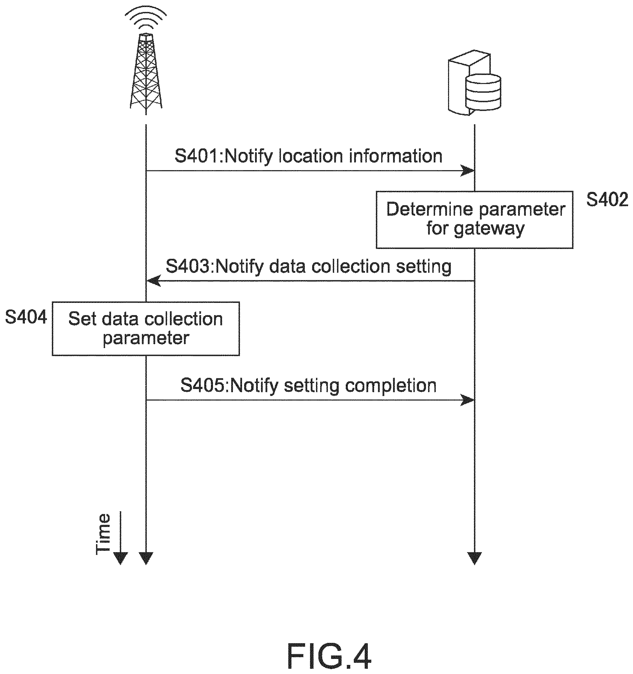

As shown in Fig. 4, in the setting process from the server 300 to the gateway 200, the server 300 sets data items to be collected and a frequency from the sensor 100 to the gateway 200.

In Fig. 4, first, the gateway 200 notifies the server 300 of location information of an own apparatus (S401). Next, the server 300 determines parameters for the gateway 200 that notified the location information (S402). Next, the parameters determined by the server 300, a data collection setting in the present embodiment, are notified (S403). Next, the gateway 200 sets the data collection parameter to the own apparatus (S404). Next, the gateway 200 notifies the server 300 of setting completion (S405).

In S402 of Fig. 4, the server 300 specifies pre-processing of data at the gateway 200 (base station) according to the data items of the collected data. Examples of the pre-processing include averaging processing, compression processing, and combining processing. The averaging processing includes averaging processing of the collected data for each terminal, and averaging processing of over terminals in an entire base station area. The compression processing includes lossless compression and lossy compression. The lossy compression includes compression by a one-way hash function. In the present embodiment, the compression is performed by the one-way hash function. The combining processing includes combining a plurality of collected data or compressed data into one or a few bundles.

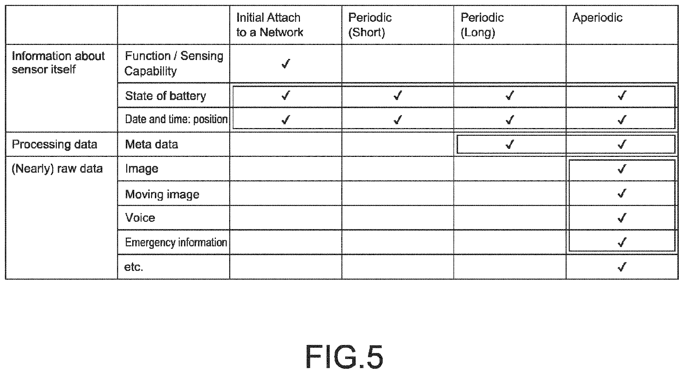

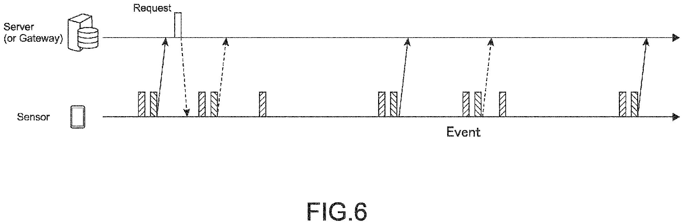

Referring to Figs. 5 and 6, a "data item to be collected" (collection data) and a "collection frequency" described above will be described. Fig. 5 shows an outline of the data items collected in the system 1. There are shown an outline and more detailed data items. Also, the data items are not limited to those shown in Fig. 5. Fig. 6 is an explanatory diagram of the collection frequency shown in Fig. 5.

As shown in Fig. 5, the data collected in the system 1, in other words, data collected by the server 300 includes information, processing data, and raw data of the sensor 100 itself. The collected data may include data to be collected only once when the sensor 100 is initially attached to the network N of the system 1, data to be collected periodically, and data to be collected aperiodically. A period of the periodically collected data may also be divided into multiple stages, such as a short period and a long period. The aperiodically collected data includes sensing data having a large amount of data such as moving images.

The periodically collected data is sent from the sensor 100 to the server 300 as indicated by the solid line arrow in Fig. 6. The aperiodically collected data is sent from the sensor 100 to the server 300 when there is a request from the server 300 or when the sensor 100 detects an occurrence of an event, as shown by a broken line arrow in Fig. 6.

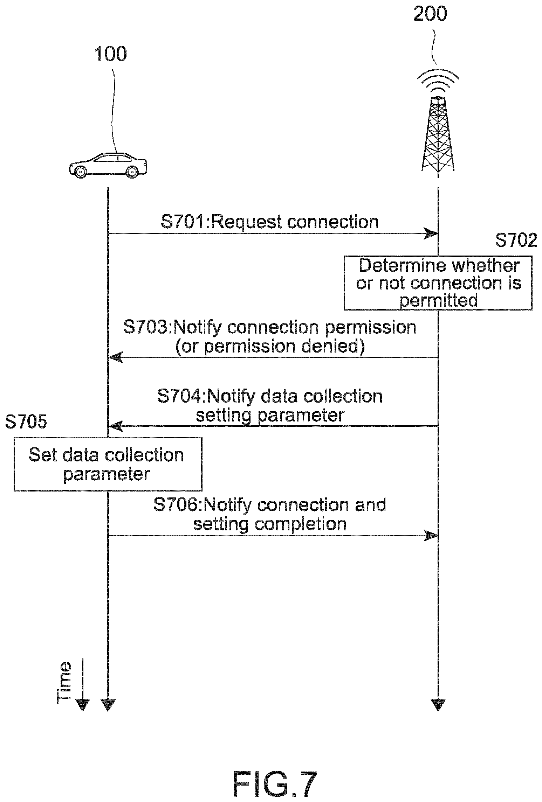

As shown in Fig. 7, in the setting process from the gateway 200 to the sensor 100, the gateway 200 notifies the sensor 100 that makes a connection request of the setting parameters for the data collection specified by the server 300. Here, the gateway 200 may perform an additional data collection setting in addition to the setting specified from the server 300. However, the setting contrary to that specified from the server 300 is not permitted. Incidentally, if the sensor 100 has already received the setting parameters once, the sensor 100 uses the setting parameters notified by the gateway 200 as a setting parameter for resetting.

Incidentally, as the case where the sensor 100 requests a connection to the gateway 200, there are cases when the network is initially attached such as when the power is turned on, when a communication function is turned on; when it handovers from one gateway (base station) to another gateway (base station), when it moves from out of range to within range, and the like. An occurrence of the handover herein includes a start of the handover, the handover in progress, and completion of the handover. The gateway 200 transmits the setting parameter to the sensor 100 at receiving timing of the connection request from the sensor 100, to thereby facilitating a smooth information collection.

In Fig. 7, the sensor 100 first requests the connection to the gateway 200 (S701). Next, the gateway 200 determines whether or not the connection request is permitted (S702). Next, the gateway 200 notifies the sensor 100 that has made the connection request of connection permission or permission denied (S703). Here, it is assumed that the connection request is permitted. Next, the gateway 200 notifies the sensor 100 of a data collection setting parameter (S704). Next, the sensor 100 sets the data collection parameter to the own apparatus (S705). Next, the sensor 100 notifies the gateway 200 of connection and setting completion (S706).

### 1.4.2. Details of setting phase

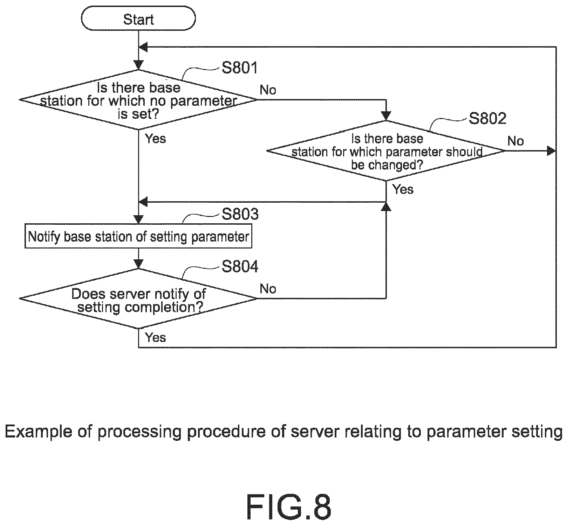

Fig. 8, Fig. 9, and Fig. 10 show examples of processing procedures of the CPU 11 as a control section of each of the server 300, the gateways 200, and the sensors 100 relating to the parameter setting.

In Fig. 8, the server 300 first checks presence or absence of the gateway 200 (base station) for which no parameter is set (S801). Even without such a gateway 200, the server 300 checks for presence or absence of the gateway 200 (base station) for which the parameters should be changed (S802). If any one of such gateways 200 is present, the server 300 notifies the gateway 200 of the setting parameters (S803). If a notification of the setting completion is included in the packet or the like of the setting parameter, the processing of the server 300 is ended (S804).

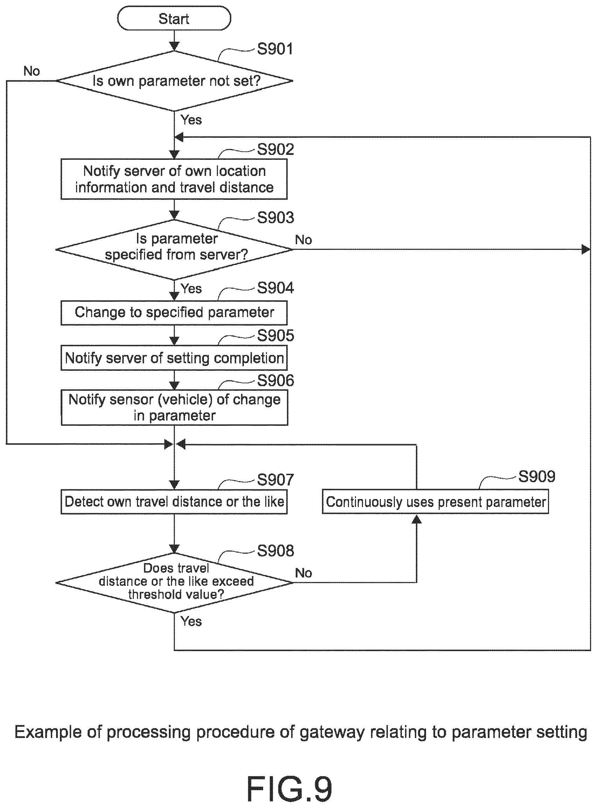

In Fig. 9, the gateway 200 first checks whether or not the parameters of the own apparatus are not set (S901). If the parameters of the own apparatus are already set (S901, No), a travel distance of the own apparatus and the like are detected (S907, which will be described later).

If the parameters of the own apparatus are not set (S901, Yes), the gateway 200 notifies the server 300 of the location information and mobility information of the own apparatus (S902). Subsequently, the gateway 200 checks whether or not the parameters are specified by the notification of the setting parameters from the server 300, as described in S803 of Fig. 8 (S903).

If the setting parameters are specified from the server 300 (S903, Yes), the gateway 200 changes the setting parameters to the specified parameters (S904). Next, it notifies the server 300 of the setting completion (S905). Next, it notifies the sensor 100 (vehicle) of a change in the parameters (S906).

Next, the gateway 200 detects the travel distance or the like of the gateway 200 (own apparatus) (S907). Next, the gateway 200 determines whether or not the travel distance or the like detected in S907 exceeds a predetermined threshold value (S908). If it is determined that the travel distance or the like exceeds the predetermined threshold value (S908, Yes), the gateway 200 notifies the server 300 of new location information or the like of the gateway 200 (own apparatus) (S902).

On the other hand, if it is determined that the travel distance or the like does not exceed the predetermined threshold value (S908, No), the gateway 200 continuously uses the setting parameters specified from the server 300 (S909), then detects the travel distance or the like (S907) and compares the detected travel distance or the like with the threshold value (S908). Incidentally, the travel distance or the like in Fig. 9 also includes the location, the base station in connection, a speed, a change in acceleration, etc.. In addition, the predetermined threshold value in Fig. 9 is an absolute amount such as a detected travel distance in the present embodiment, but in other embodiments, the predetermined threshold value may be a relative change amount (difference) of the travel distance or the like.

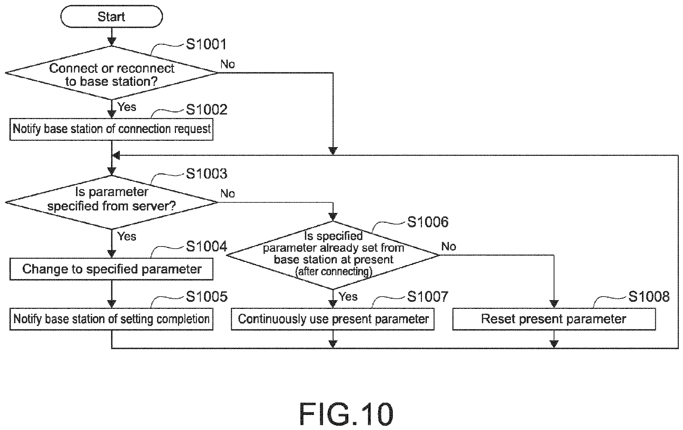

In Fig. 10, the sensor 100 first determines whether or not to connect (including reconnect) to the gateway 200 (base station) (S1001). Next, the sensor 100 notifies the gateway 200 of the connection request (S1002). Next, the sensor 100 determines whether or not the parameters are already specified by the server 300, and if the parameters specification are already set, the sensor 100 changes the setting parameters to the specified parameters (S104). Next, the sensor 10 notifies the gateway 200, which is the base station, of the setting completion (S1005).

If the setting parameters are not specified (S1003, No) from the server 300, the sensor 100 checks whether or not the specified parameters are already set from the gateway 200 at present (after connection) (S1006). If it is already set, the present parameters are continuously used (S1007). If it is not set, the present parameters are reset (S1008). The sensor 100 waits for the next parameter specification from the server 300 (S1003) in any of the parameter setting (S1005), the continuous use of the parameters (S1007), and the resetting of the parameters (S1008).

If the sensor 100 resets the data collection parameter (S1008), it stops sending data to the gateway 200 (or server 300). However, even in this case, the sensor 100 may continue to collect (such as sensing) data internally.

### 1.5. Operation phase

### 1.5.1. Sensor data collection process

The operation phase is divided into two stages: a data collection process from the sensor 100 to the gateway 200, and a data collection process from the gateway 200 to the server 300. The data collection process from the sensor 100 to the gateway 200 is divided into a process of establishing a connection (former stage) and a process of sensing and sending data (latter stage).

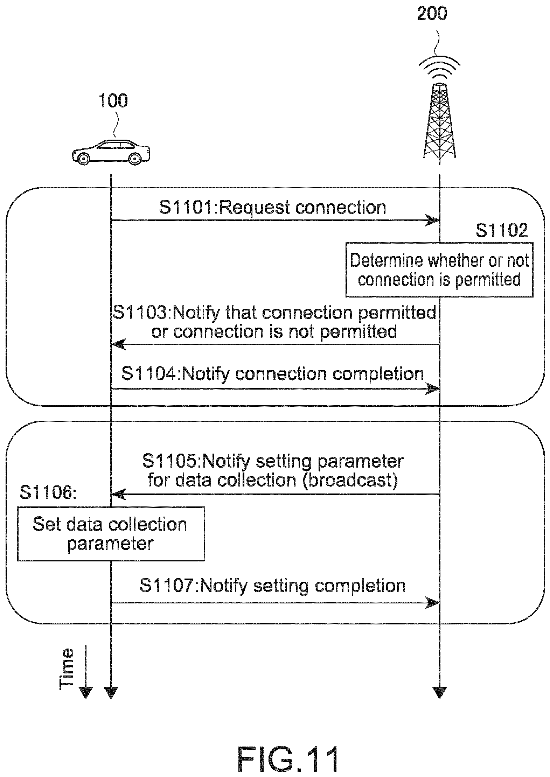

As shown in Fig. 11, in the former stage of the data collection process from the sensor 100 to the gateway 200, the sensor 100 establishes a connection with the gateway 200.

In Fig. 11, the sensor 100 first issues the connection request to the gateway 200 (S1101). Next, the gateway 200 determines whether or not the connection to the sensor 100 that issued the connection request is permitted (S1102). Next, the gateway 200 notifies the sensor 100 of a determination result that the connection is permitted or the connection is not permitted (S1103). In this illustrative example, it assumes that the connection is permitted and the sensor 100 then notifies the gateway 200 of the connection completion (S1104).

When the connection to the sensor 100 is established, the gateway 200 notifies of the setting parameters for the data collection (S1105). This notification may be performed to all the sensors 100 connected to the gateway 200 in a broadcast manner (S1105). Next, the sensor 100 sets the data collection parameter notified from the gateway 200 to the own apparatus (S1106). In addition, the sensor 100 notifies the gateway 200 of the setting completion (S1107).

As shown in Fig. 11, in the present embodiment, the gateway 200 transmits the setting parameters for each sensor 100 that issued the connection request in S1105 (or sensor 100 that issued connection request and connection is permitted). That is, the gateway 200 transmits the setting parameters to the sensor 100 in a unicast manner. By transmitting the setting parameters to sensor 100 in the unicast manner by the gateway 200, the setting parameters suitable for the state and environment of each sensor 100 are applied to the sensor 100. In addition, when transmitting the setting parameters to the sensor 100, the gateway 200 transmits only the difference from the setting parameters transmitted last time to the sensor 100. By transmitting only the difference by the gateway 200, the amount of data flowing over the network is reduced.

Note that the gateway 200 may collectively notify the plurality of sensors 100 within the communication range of the gateway 200 of the data collection parameter in S1105. That is, the gateway 200 may transmit the setting parameters to the plurality of sensors 100 in the broadcast (or multicast, groupcast) manner. As the gateway 200 transmits the setting parameters to the sensor 100 in the broadcast manner or the like, it is possible to notify the number of sensors 100 of the setting parameters with a small number of, once or the like, communications. The gateway 200 may notify the setting parameters periodically (e.g., once in 10 minutes, etc.) by the broadcast manner or the like, regardless of the establishment of the connection with the sensor 100 (S1101 to S1104) .

Since the setting parameters transmitted to the sensor 100 are a set of parameters configured to include a plurality of setting parameters, the gateway 200 may notify each sensor 100 that issued the connection request (or each sensor 100 that issued connection request and connection is permitted) of a part of the setting parameters, and may notify collectively the plurality of sensors 100 within the communication range of the gateway 200 of other part of the setting parameters such as the remaining setting parameters.

In a case where the gateway 200 notifies a part of the setting parameters in the unicast manner, and yet notifies other part of the setting parameters in the broadcast manner or the like, the gateway 200 selects the communication method for transmitting the setting parameters depending on the type of the setting parameters from the communication methods such as unicast, broadcast, multicast, group cast, and the like. The gateway 200 transmits, for example, the setting parameters for collecting data such as a personal state of a driver of a mobile body (vehicle, etc.) by the unicast manner that transmits for each sensor 100. On the other hand, the gateway 200 transmits the setting parameters for collecting data such as environment information centered on the gateway 200 by the broadcast manner that is simultaneously transmitted to the sensors 100 subordinate to the gateway 200. As described above, the communication section 19 (or CPU 11) of the gateway 200 transmits the setting parameters of the type in which the individual setting is applied to each sensor 100 to the sensor 100 by the unicast manner, and transmits the setting parameters of the type in which the same setting is applied to an unspecified number of sensors 100 to the sensor 100 by the broadcast manner, thereby enabling flexible distribution of the setting parameters. Thus, with this configuration, it is possible to dynamically respond to a change in the load of the network and the server.

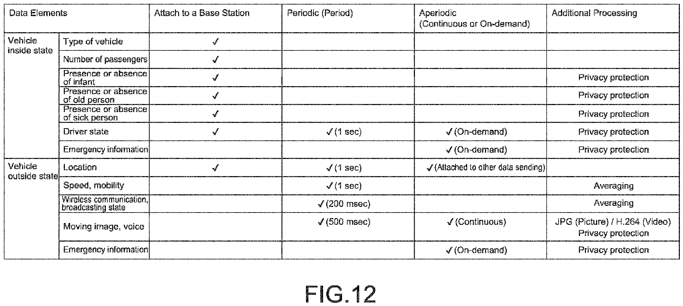

Referring to Fig. 12, there is shown specific examples of the sensing data (collected data) to be transmitted from the sensor 100 to the gateway 200. As shown in Fig. 12, in the case where the sensor 100 is placed on the mobile body such as a vehicle as in the present embodiment, for example, data relating to a vehicle inside state (number of passengers, etc.) and data relating to a vehicle outside state (position data, data relating to mobility such as speed, wireless communication environment, etc.) are exemplified as the sensing data.

As shown in Fig. 12, data items, timing, additional processing, and the like to be sent from the sensor 100 to the gateway 200 are specified by the setting parameters sent from the gateway 200 to the sensor 100. In the example of Fig. 12, as settable timing, network attachment timing, periodic timing, aperiodic timing, and the like are shown.

Incidentally, the timing of the data collection (sensing, etc.) in the sensor 100 needs not be in accordance with sending timing shown in Fig. 12. The sending timing of Fig. 12 is set by the setting parameter, and the data collection itself may be performed at more frequent timing. For example, for the data items that need periodic sending, it is desirable that the data collection period be equal to or shorter than the setting of Fig. 12 (data sending period **≦** data sensing period), or that the data collection frequency be equal to or higher (data sending frequency **≧** data sensing frequency).

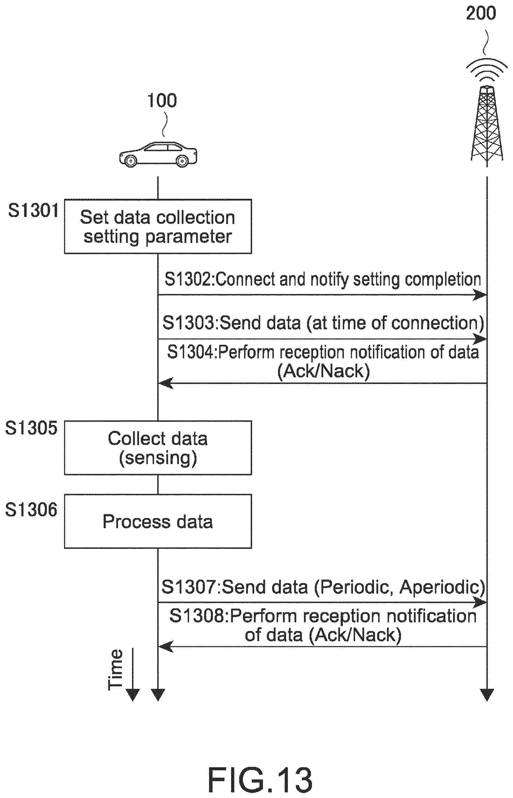

As shown in Fig. 13, at the latter stage in the data collection process from the sensor 100 to the gateway 200, the sensor 100 performs the data collection (sensing) and data sending depending on the setting parameters set in the setting phase.

In Fig. 13, first, the sensor 100 performs the data collection (sensing) (S1301). At this time, the sensor 100 reapplies the setting parameters to the own apparatus as necessary (S1301). Next, the sensor 100 connects to the gateway 200 and notifies the setting completion (S1302). Next, the sensor 100 sends the collected data (sensing data) to the gateway 200 (S1303). Next, the gateway 200 performs a reception notification of the sensing data (S1304). This notification is performed regardless of whether the reception is successful (Ack) or unsuccessful (Nack).

The above processing in Fig. 13 is performed when the sensor 100 sends the sensing data simultaneously with the connection to the gateway 200.

The data may be processed in the vehicle between the data collection (sensing) and the data sending. Specific examples of data processing include time averaging of the collected data, encoding of collected moving images, a privacy protection (mosaic to person), and the like.

In a case where the sensor 100 performs processing (compression, etc.) of the sensing data in the own apparatus, the sensor 100 performs the data processing (S1306) after the data collection (S1305). The subsequent processes (S1307, 1308) are the same as those of S1303, S1304.

In Fig. 13, the sensor 100 may discard the previously collected data if a change in the data collection setting parameter occurs during the data collection or prior to the data sending (e.g., from S1301 to S1303) .

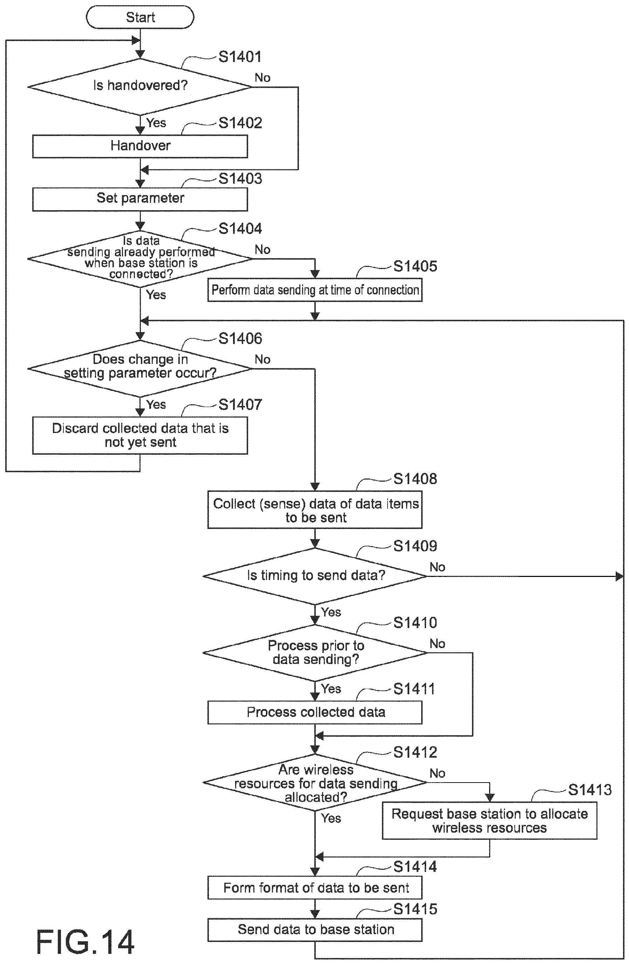

Fig. 14 shows an example of a processing procedure of the data collection (sensor 100). In Fig. 14, it is first determined whether or not the sensor 100 is handovered (S1401). When the handover is performed (S1401, Yes), the sensor 100 executes a series of processes of the handover (S1402) and sets the parameters of the sensor 100 (own apparatus) according to the setting parameters received from the gateway 200 newly connected by the handover (S1403). By updating the setting parameters of the sensor 100 (own apparatus) at the timing of the occurrence of the handover (including start of handover, handover in progress, and completion of handover) when the sensor 100 placed on the mobile body (vehicle, etc.) is moved, the sensor 100 can collect information using appropriate setting parameters immediately after entering an area in which communication with the gateway 200 is valid.

On the other hand, when the handover is not performed (S1401, No), the sensor 100 skips the handover process, and sets the parameters of the own apparatus on the basis of the setting parameters received from the gateway 200 (S1403). After setting the parameters, the sensor 100 determines whether or not data sending to be performed is already performed when the data is initially connected to the gateway 200, that is, when the data is initially attached to the gateway 200 (S1404). The data transmitted when the sensor 100 first connects to the gateway 200 includes static information of the sensor 100 (own apparatus) such as specifications and firmware versions of the CPU 11 and the RAM 13, dynamic information of the sensor 100 (own apparatus) such as a temperature of the CPU 11 and a utilization rate of the RAM 13, and environmental information of the sensor 100 (own apparatus) such as the sensing data. When the data to be sent at the time of first connecting to the gateway 200 is not yet transmitted (S1404, No), the sensor 100 transmits the data to the gateway 200 (S1405).

After setting the parameters to the sensor 100 (own apparatus) according to the setting parameters received from the gateway 200, the sensor 100 determines whether or not a change occurred in the setting parameters distributed and transmitted by the gateway 200 (S1406). Since the gateway 200 notifies the sensor 100 that the setting parameters are changed, the sensor 100 determines whether the setting parameters are changed on the basis of the presence or absence of the notification from the gateway 200. If the setting parameters are changed (S1406, Yes), the sensor 100 discards the collected data that is not yet sent to the gateway 200 (S1407), handovers it (S1402) if necessary, and resets the parameters (S1403).

On the other hand, when no change occurred in the setting parameters (S1406, No), the sensor 100 collects (senses) the data of the data items to be sent (S1408). Next, the sensor 100 continues sensing until timing to send the data comes (S1409). When the timing to send the data comes (S1409, Yes), the sensor 100 determines whether or not to process the sensing data prior to the data sending (S1410). If the sensing data is processed (S1410, Yes), the sensor 100 processes the collected sensing data (S1411). On the other hand, if the sensing data is not processed (S1410, No), the sensor 100 skips the process of the collected sensing data.

Next, the sensor 100 confirms whether or not wireless resources for the data sending are allocated (S1412), and if they are not allocated (S1412, No), the sensor 100 requests the gateway 200 to allocate the wireless resources (S1413).

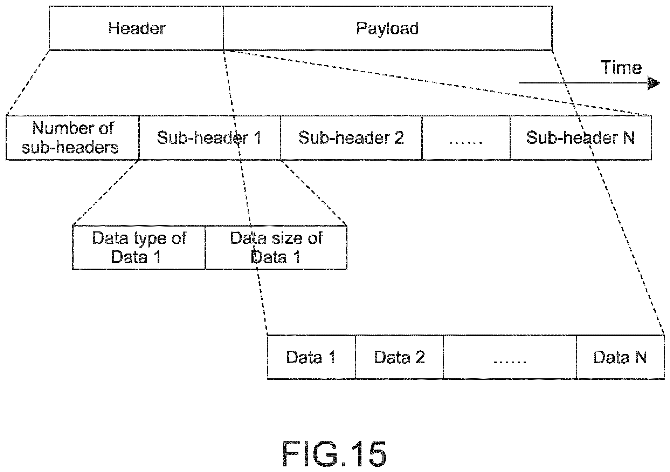

Next, the sensor 100 forms a format of the data to be sent (S1414) and sends the data to the gateway 200 using the allocated wireless resources (S1415). An example of a data format formed in S1414 is shown in Fig. 15. As shown in Fig. 15, the format of the data sent from the sensor 100 is divided into a header and a payload, and a plurality (including a plurality of types) of bundles of collected data can be stored.

In the sensor data collection process described above with reference to Figs. 13 and 14 (particularly from S1401 to S1403), each time the handover occurs, the sensor 100 downloads the setting parameters from the gateway 200 and applies them to the own apparatus. Conversely, the gateway 200 transmits the setting parameters corresponding to a download request of the setting parameters from the sensor 100 handovered. The gateway 200 may transmit the setting parameters using handover generating information as an occurrence event. The detailed process of the processing relating to the transmission of the setting parameters is as described in the setting phase.

### 1.5.2. Gateway data collection process

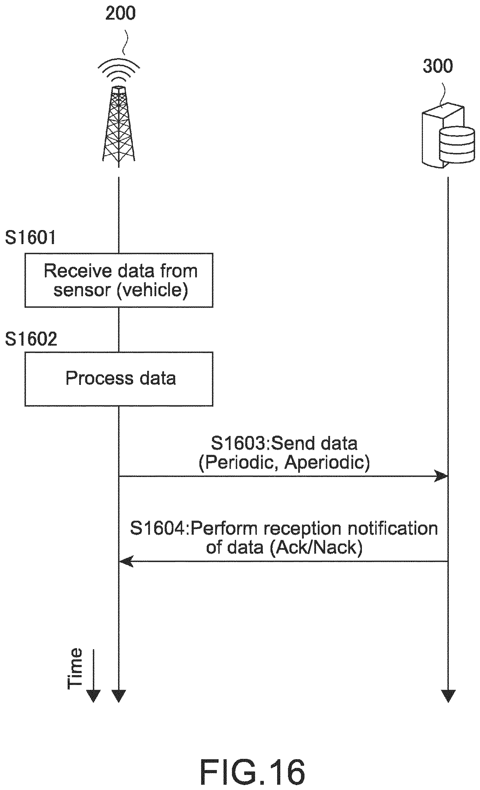

As shown in Fig. 16, in the data collection process from the gateway 200 to the server 300, the gateway 200 performs data sending according to the setting parameters set from the server 300.

In Fig. 16, the gateway 200 receives the sensing data from the sensor 100 (vehicle) (S1601) and processes the received data as necessary (S1602). Next, the gateway 200 transmits the processed data (or unprocessed data) to the server 300 at a variety of timing, such as periodic timing and aperiodic timing. When the server 300 receives the data, the server 300 returns a reception notification of the data to the gateway 200 (S1604).

Incidentally, the gateway 200 itself may perform the data collection (sensing). In this case, the gateway 200 also functions as the sensor 100.

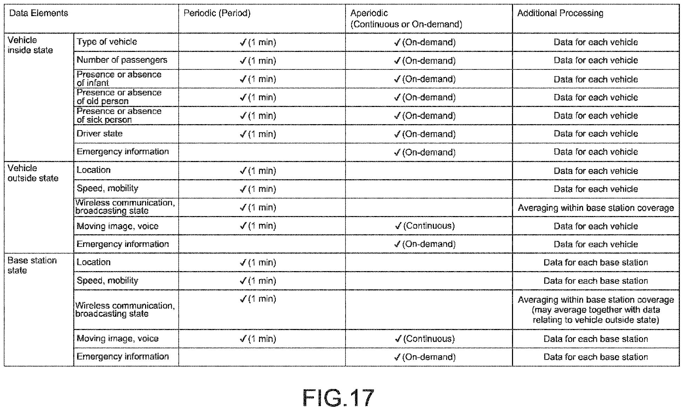

In Fig. 16, the data processing is not indispensable, and the gateway 200 determines whether or not to perform the data processing. Specific embodiments of the data processing include, for example, averaging, compression, and combining of data. If the data processing is performed in S1602 of Fig. 16, for example, if the gateway 200 performs processing, the gateway 200 distinguishes the collected data from the data handled for each vehicle and the data subject to the averaging process within a base station coverage. Fig. 17 shows distinguished data items. As shown in Fig. 17, the gateway 200 specifies data items, timing, additional processing, and the like to be transmitted from the gateway 200 to the server 300.

If the collected data is handled as data for each vehicle, the collected data tends to have a larger amount of data, and the gateway 200 then compresses the data. In this case, the compression by the one-way hash function may be performed. If the compression by the one-way hash function is performed, a hash value output obtained by inputting the sensing data into the one-way hash function becomes data actually collected (transmitted or received). In addition, if the compression is performed by the one-way hash function, the sensing data itself before the compression does not have to be collected (only hash value is collected).

In the following, it is assumed that the gateway 200 performs the compression using the one-way hash function as an example of processing, and a detailed data collection process of the gateway 200 will be described.

First, as the background for performing such compression, when attempting to collect the data collected from the sensor 100 as it is to the server 300, the amount of data is problematically increased in proportion to the number of devices of the sensor 100. Normal compression (such as zip) does not change a relationship in a proportional increase in the amount of data.

Therefore, in the present embodiment, as a solution, the compression using the one-way hash function is employed. In the present embodiment, by performing the compression in the gateway 200, the load on the device and the cloud is reduced, and an amount of communication in a wireless section is reduced.

Furthermore, in the present embodiment, a hash tree is constructed in the entire system 1 or a part of the system 1. The hash tree is generated in units of the gateways 200 (base stations). The data collected by the sensor 100 is highly dependent on a location. Therefore, if the hash tree is generated in the units of the gateways 200 (base stations), that is, in units of locations, the usability upon using data is improved compared with a case where the hash tree is not generated in the units of the locations. In addition, the gateway 200 (base station) adds a header to the hash tree and describes information (location information) of the gateway 200 (base station) that performs the compression on the header.

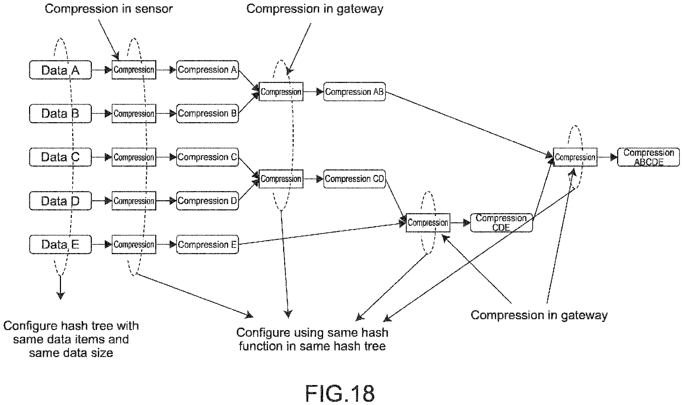

Fig. 18 shows an example of a hash tree. As shown, at each gateway 200 or sensor 100, the compression is again performed on a hash combined with the compressed hash in a subordinate gateway 200 or sensor 100 by the one-way hash function. The hash tree is constructed as shown in Fig. 18.

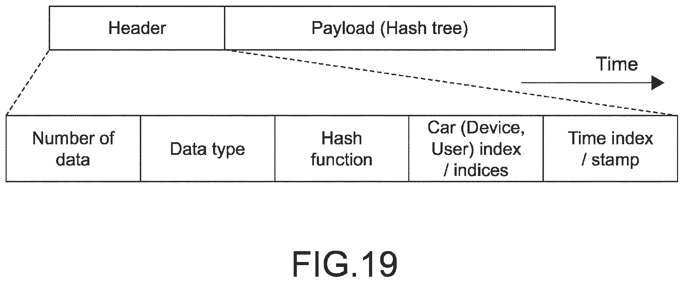

In Fig. 18, it is desirable that the data items constituting one hash tree are the same. In addition, the hash function that makes up a single hash tree is desirably the same. Specific examples of the indexes A to E attached to the data in Fig. 18 include, for example, the indexes (IDs (Identifiers)) of different vehicles that collected the data at the same time (or at a time close to the same time). In addition, there are different times (or time indexes) in the same vehicle. Furthermore, Fig. 19 shows an example of a hash data format.

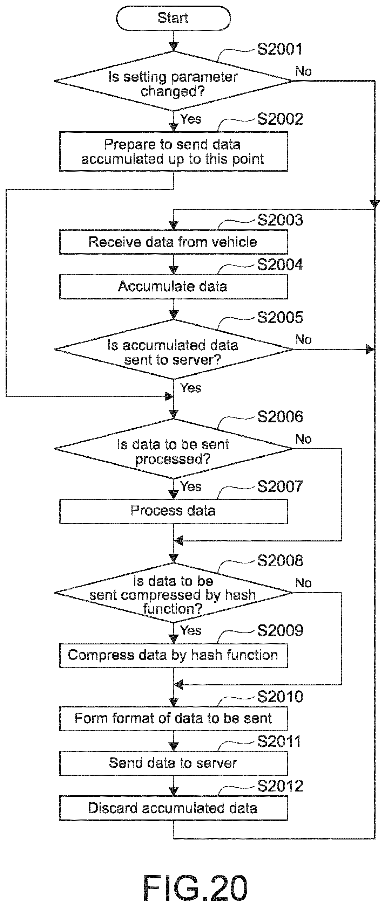

Fig. 20 is an example of a processing procedure of the data collection process of the gateway 200. In Fig. 20, the gateway 200 first checks whether or not the setting parameters distributed by the server 300 are changed (S2001). If the setting parameters are changed (S2001, Yes), the gateway 200 prepares to send the data received from the sensor 100 and accumulated up to this point (S2002).

On the other hand, if the setting parameters are not changed (S2001, No), the gateway 200 receives the data from the sensor 100 (vehicle) (S2003). Next, the gateway 200 then accumulates the data (S2004) and waits for timing at which accumulated data is sent to the server 300 (S2005). Next, when the timing of data transmission arrives (S2005, Yes), the gateway 200 determines whether or not to process the data (except for compression by the hash function) (S2006).

The gateway 200 determines whether or not the data processing is needed (S2006) first on the basis of the sensing data of the sensor 100 and second on the basis of the setting parameters for the data collection set in the sensor 100 in the setting phase.

In a first determination, the gateway 200 determines what event occurred in the system 1 (hereinafter referred to as "occurrence event") on the basis of the sensing data of the sensor 100, and determines whether or not the data processing is necessary on the basis of the determined occurrence event. The occurrence event include entire events sensed by the sensor 100, such as detection of an accident, a movement of the sensor 100 (and moving object such as vehicle on which it is placed), an occurrence of the handover of the moving object (including start of handover, during execution of handover, completion of handover), and the like.

In a second determination, the gateway 200 determines whether or not the data processing is needed depending on the setting parameters of the sensor 100, in particular, the type of each data item. Each data item of the setting parameters is set as data for each vehicle or data for each base station (Fig. 17). Therefore, for example, the gateway 200 determines that if it is the data for each vehicle, the data is processed, and if it is the data for each base station, the data is not processed.

As described above, in the present embodiment, the gateway 200 serving as an intermediate node between the server 300 and the sensor 100 in the system 1 determines whether or not the processing of the sensing data is necessary. Therefore, the load is not concentrated on the server 300, and the server 300 only needs to transmit the setting parameters optimized according to the network load or the like to the intermediate node for each bundle of sensors, so that the data collection can be optimized dynamically corresponding to the network load.

Next, the gateways 200 processes the data on the basis of the determination in S2006 (S2007). Next, the gateway 200 determines whether or not to compress the data by the hash function (S2008). This is also done on the basis of the setting parameters to the gateway 200 sent from the server 300 in the setting phase similar to the determination in S2006.

Next, the gateway 200 compresses the data by the hash function on the basis of the determination in S2008 (S2009).

Next, the gateway 200 forms the format (Fig. 19) of the data to be sent (S2010). Next, the gateway 200 sends data to the server 300 in the formed data format (S2011). Next, the gateway 200 discards accumulated data (S2012).

Incidentally, if the setting parameters in the gateway 200 are changed, it may send the data accumulated so far. In addition, since the wired network has a margin of resources compared with the wireless network, the data may be sent without the processing/compression in the wired network at the time of the determination in S2006 or S2008.

### 1.5.3. Server data collection process

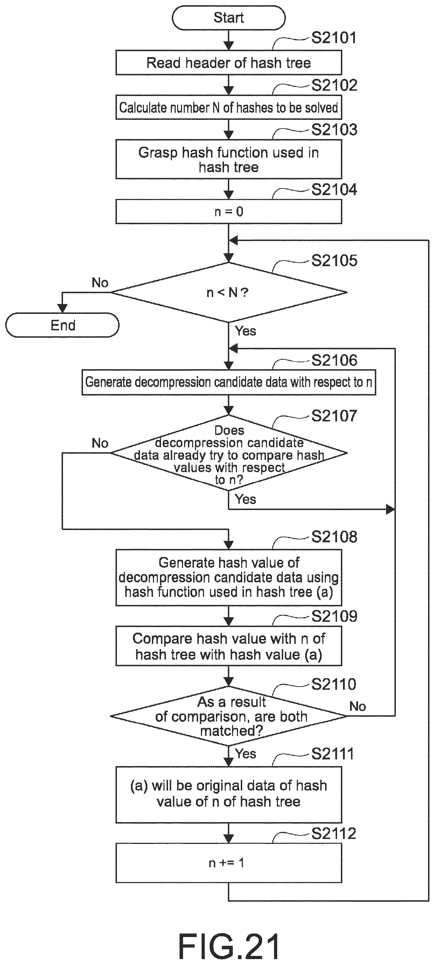

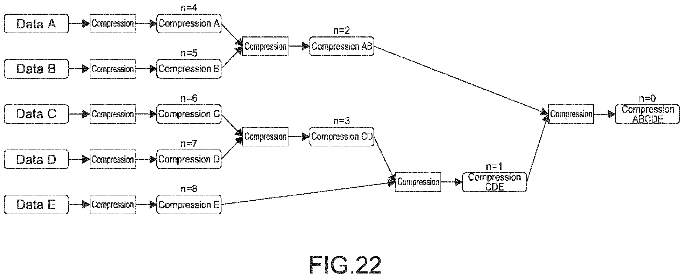

Fig. 21 is an example of a procedure of a data collection process (server 300). Fig. 22 is a diagram for explaining an outline of a method of reproducing data on the basis of the hash tree in the server 300.

In Fig. 21, the server 300 reads the header of the hash tree (S2101) and calculates the number of hashes to be solved Nwo (S2102). Next, the hash function used in the hash tree is grasped (S2103) and 0 is set to a work variable n (S2104). Thereafter, until n < N (S2105), the following operations are repeated: decompression candidate data is generated (S2106), a hash of the decompression candidate data is generated (S2108), and the generated hash is compared with the hash value of the data used in the hash tree (S2109), and a match is searched (S2110).

In the case of Fig. 22, since the number of data is 5, N is 9, and it is desirable that the index n (0 to N-1) of the hash value be amplified with priority of the width. The process of grasping the hash function includes grasping a data size (hash size) before and after the hash function processing.

As described above, data compressed by the one-way hash function can also be reproduced. In addition, the compression by the one-way hash function has a good compression ratio, which reduces the load on the network N and the server 300.

### 1.6. Utilization phase

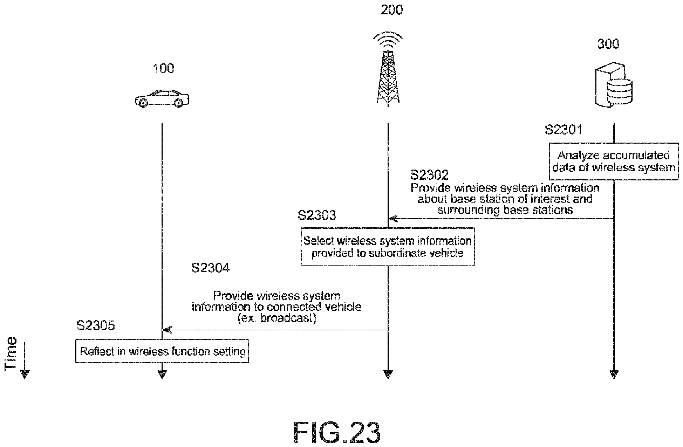

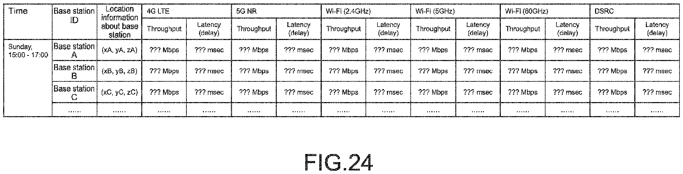

Fig. 23 is a diagram showing an outline of the utilization phase. In the present embodiment, since an evaluation of the wireless communication system in the vehicle is returned as feedback, the server 300 analyzes the accumulated data of the wireless communication system as shown in Fig. 23 (S2301). As the analysis result, for example, the server 300 outputs data as shown in Fig. 24.

Fig. 24 shows an example of wireless system environment information provided from the server 300. As shown, the server 300 provides a wireless system that may be available in an area corresponding to the base station and its communication quality (e.g., throughput, network delay, etc.). It should be noted that the server 300 desirably provides information about not only a single base station but also a plurality of base stations including a periphery.

There are two methods of feedback from the server 300 to the sensor 100. The first method is a method of broadcasting from the gateway 200 to the sensor 100 in the area. The second method is a method of requesting from the sensor 100 to the gateway 200. In the second method, destination information of the vehicle on which the sensor 100 is placed may also be sent together with the request, and the server 300 may provide the information about the base station (gateway 200) around a route.

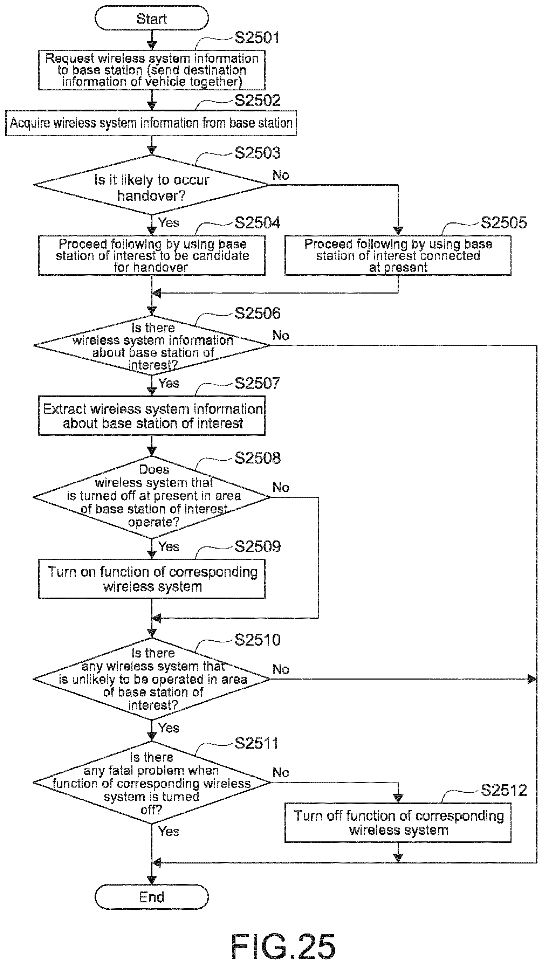

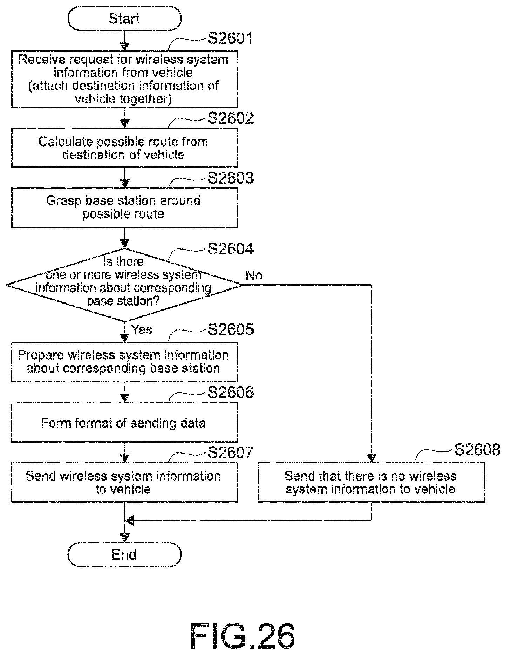

The processing procedures of the sensor 100 and the server 300 in the second method will be described with reference to Figs. 25 and 26.

In Fig. 25, the sensor 100 requests wireless system information to the base station (gateway 200) (S2501). At this time, the destination information of the vehicle is sent together. Next, when the wireless system information is acquired from the gateway 200 (S2502), the sensor 100 extracts the wireless system information about the base station of interest (S2506, S2507) according to a possibility of the occurrence of the handover (S2503 to S2505), and checks whether or not the wireless system that is turned off at present in the area of the base station of interest operates in the own apparatus (S2508). If there is such a function, the function is turned on (S2509). Conversely, any wireless system that is unlikely to be operated in the area of the base station of interest is turned off unless it is fatal (S2510 to S2512).

In Fig. 26, when the server 300 receives a request for the wireless system information with the destination information also attached from the vehicle (sensor 100) (S2601), the server 300 calculates a possible route from the destination of the vehicle (S2602) to grasp the base station (gateway 200) around the possible route (S2603). Next, the server 300 determines whether or not there is one or more wireless system information about the corresponding base station (S2604). If present, the wireless system information about the corresponding base station is prepared (S2605), is formed in a predetermined format (S2606), and is transmitted (S2607). Note that if there is no wireless system information, that is sent to the vehicle (S2608).

When it is utilized as described above, the sensor 100 can set a pre-optimized wireless system using the wireless system information (such as wave intensity) accumulated by the other sensors 100.

### 2. Second Embodiment

As described above, the first embodiment assumes the states of various wireless communication environments of the in-vehicle device (radio wave intensity, etc.) as an example of the collected data. The present technology may take various embodiments. The second embodiment discloses an example in which the sensing data is utilized by using the same system and configuration as in the first embodiment when an accident event occurs.

The "accident event" in the second embodiment refers to an accident or the like, but as described in the first embodiment, the "occurrence event" in the entire present technology includes that a handover occurred in a lower node and that the movement of the sensor 100 (or vehicle or the like on which it is placed) occurred. In the present embodiment, it is assumed that the accident event is an example of the occurrence event.

In the second embodiment, when a traffic accident occurs, an example in which an anticipated damage situation is provided to a specific external organization (police, fire department, hospital, etc.) is shown, but the present technology is not limited thereto. Note that the system configuration of the present embodiment and the configurations of the server 300, the gateway 200, and the sensor 100 may be the same as those of the first embodiment.

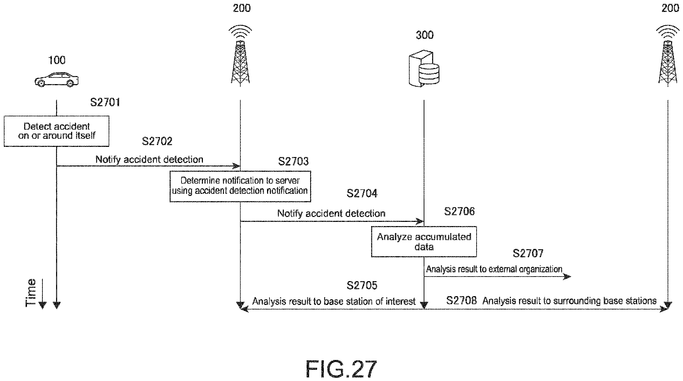

Fig. 27 is a diagram for explaining an outline of an overall operation of the second embodiment. In Fig. 27, when the sensor 100 detects an accident on or around itself (S2701), the sensor 100 sends an accident detection notification to the near gateway 200 (S2702). The gateway 200 determines the notification to the server 300 using the accident detection notification.

The accident detection notification is detected by the sensor section 20 and the sensor section 21 of the sensor 100. In a case where the sensor section 20 and the sensor section 21 are configured as in-vehicle cameras, the sensing data is acquired as the moving image. Incidentally, in a case where the gateway 200 has a monitoring camera or the like as the sensor device, the gateway 200 can also acquire the moving image as the sensing data.

The gateway 200 notifies the server 300 of the accident detection notification (S2704). Furthermore, in parallel with this, the gateway 200 performs a data analysis, and sends and transmits the analysis result to the gateway 200 to be sent such as the base station affected by the accident (S2705).

In response to the accident detection notification, the server 300 accumulates the attached sensing data, and performs the analysis on the basis of the accumulated data (S2706). Sensing and sending of the sensing data by the gateway 200 to the server 300 may be performed continuously, and such sensing and sending may be done by the plurality of gateways 200. The server 300 sends and transmits the analysis result to an external organization such as a police or a fire department (S2707). In addition, the server 300 sends and transmits the analysis result to the gateway 200 to be sent such as the base station affected by the accident (S2708).

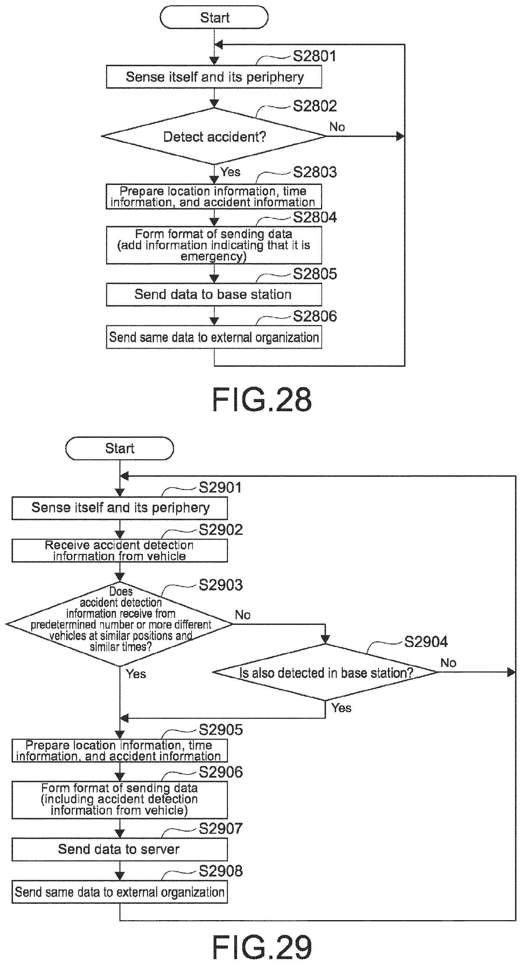

Figs. 28, 29, and 30 show examples of processing procedures in the CPU 11 that functions as each control section of the server 300, the gateway 200, and the sensor 100 in the present embodiment.

In Fig. 28, the sensor 100 senses the own apparatus and its periphery (S2801). When the sensor 100 detects an occurrence of the accident event during sensing (S2802, Yes), the sensor 100 sends the location information, time information, and accident information to other devices (including server 300, gateway 200, other sensor 100, and external organization). Thus, the information is prepared (S2803). Next, the sensor 100 forms a format of the sending data (S2804). At this time, the sensor 100 may form a format to which information indicating that it is an emergency is added. Next, the sensor 100 sends formatted sensing data to an upper node of the gateway 200 (S2805). Before and after this, the same data may be sent to the external organization (S2806).

In Fig. 29, the gateway 200 senses itself and its periphery (S2901). S2901 may be performed if the gateway 200 also has the function of the sensor 100. Next, the gateway 200 receives information (location information, time information, accident information) about the detected accident from the sensor 100 (vehicle) (S2902). The gateway 200 may also receive accident detection information from each of the plurality of sensors 100.

Next, the gateway 200 determines whether or not the accident detection information is received from a predetermined number or more different sensors 100 (vehicles) at similar positions and similar times (S2903). If such a condition is not met (S2903, No), the gateway 200 determines that the accident notified is an error or false detection, except when the accident is also detected in the own apparatus (S2904, Yes) .

If the number of the sensors 100 becomes quite a lot, a possibility of the false detection increases. In the present embodiment, the gateway 200 determines that accuracy of the accident occurrence is high when an accident occurrence location is within a predetermined range on the basis of on the location information included in the accident detection information (similar location), when an accident occurrence time is within a predetermined range on the basis of the time information included in the accident detection information (similar time), when there are a plurality that can be determined as the accident detection information for the same accident (S2903, Yes), and when the accident is detected even in the own apparatus (S2904, Yes). Thus, even if the false detection occurs in the sensor 100, processing can be performed by appropriately removing the false detection in the gateway 200.

Next, the gateway 200 prepares the location information, the time information, and the accident information in order to transmit the information to another apparatus (including server 300, upper node of gateway 200, and external organization) (S2905). Next, the gateway 200 forms of the transmitted data (S2906). At this time, the gateway 200 may form a format to which information indicating that it is the emergency is added. Next, the gateway 200 sends the formatted sensing data to the server 300 (S2907). Before and after this, the same data may be sent to an external organization (S2908).

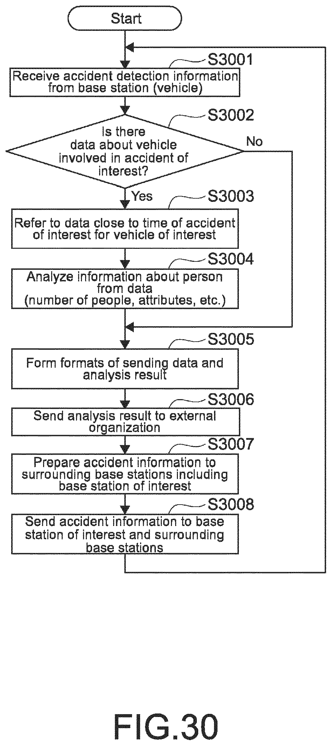

In Fig. 30, the server 300 receives the accident detection information from the gateway 200 (base station) and/or the sensor 100 (vehicle) (S3001). Next, the server 300 determines whether or not there is data about the vehicle involved in the accident relating to the notification of interest (S3002). If present, the server 300 refers to data close to the time of the accident of interest for the vehicle of interest (S3003). Next, the server 300 analyzes the information about the person from the data (number of people, attributes, etc.) (S3004).

Next, the server 300 forms the formats of the transmitted data and the analysis result in S3004 (S3005). Next, the server 300 sends a formatted analysis result to an external organization (S3006). Next, the server 300 prepares the accident information to the surrounding base stations including the base station of interest relating to the gateways 200 (base stations) to which the accident detection information is sent (S3007). Next, the server 300 sends the accident information to the base station of interest and the surrounding base stations (S3008).

In the above processing procedure, the accident event is detected in the processing from S2902 to S2904. The accident event is an example of the occurrence event. The CPU 11 functioning as the control section of the gateway 200, when the accident event is detected as described above, the CPU 11 sets the setting parameters of the own apparatus not to process the sensing data so that the sensing data is available for real-time processing. The CPU 11 then determines that substantial processing of the data at the gateway 200 is not needed on the basis of the setting of interest.

For example, the gateway 200 does not compress by a hash function that takes a long time to decompress. Although not limited thereto, the gateway 200 continues to collect data without the processing such as the compression, and continues to transmit the collected data to the server 300 or the like. This makes it possible to immediately use the information in the vehicle involved in the accident. Incidentally, after the collection by the server 300 and after a predetermined time is elapsed, it may be compressed by the server 300 to save storage.

The gateway 200 in the present embodiment determines whether or not processing of the sensing data is necessary in response to an event indicated by the sensing data (accident and the like). In the present embodiment, when the gateway 200 detects an accident, the sensing data is not compressed. Therefore, according to the present embodiment, the accuracy of the sensing data is not lowered in an important situation in which the traffic accident occurs. In addition, according to the present embodiment, since it is possible to collect the vehicle, the number of passengers, and characteristics of the person, it is possible to appropriately adjust the scale of a fire engine and an ambulances that rush to an accident site.

Note that, in the present embodiment, an "accident" is exemplified as the occurrence event detected by the sensor 100, but is not limited to the accident. The gateway 200 may determine whether or not real-time processing is necessary depending on the sensing data. For example, if the sensing data is data that loses a value when uploaded to the server 300 later, data for live broadcasting, moving images of an accident or a disaster, or the like, the gateway 200 determines that real-time processing is necessary. If the gateway 200 determines that the real-time processing is necessary, the gateway 200 uploads the sensing data to the server 300 without processing the data each time the sensor 100 uploads the sensing data. Each time the sensing data is received, the server 300 performs processing on the sensing data.

### 3. Third embodiment

In the above-described second embodiment, when the accident event is detected, it determines the notification to the server using the sensing data (S2703). However, since immediacy of information sharing is needed in the emergency, the processing of the sensing data in the gateway 200 may be passed. An example in this case will be described below as a third embodiment.

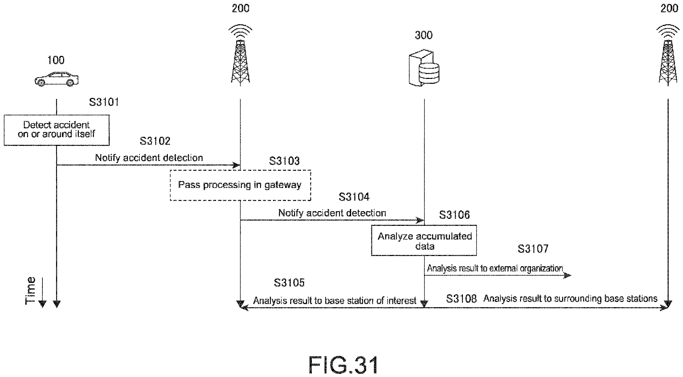

Fig. 31 is a diagram for explaining an outline of the overall operation of the third embodiment. In Fig. 31, when the sensor 100 detects the accident on or around itself (S3101), the sensor 100 transmits a notification of the accident detection to the near gateway 200 (S3102). The gateway 200 determines whether or not to perform the processing in the gateway 200 on the basis of information indicating the emergency included in the notification of the accident detection (S3103). However, in the present embodiment, it is determined that "processing is not performed" (S3103).

The gateway 200 notifies the server 300 of the accident detection (S3104). In parallel with this, the gateway 200 performs the data analysis, and sends and transmits the analysis result to the gateway 200 to be sent such as the base station affected by the accident (S3105).

In response to the notification of the accident detection, the server 300 accumulates the attached sensing data, and performs the analysis on the basis of the accumulated data (S3106). Sensing and sending of the sensing data by the gateway 200 to the server 300 may be continuously performed, and such sensing and sending may be performed by the plurality of gateways 200. The server 300 sends and transmits the analysis result to an external organization such as a police or a fire department (S3107). In addition, the server 300 sends and transmits the analysis result to the gateway 200 to be sent such as the base station affected by the accident (S3108).

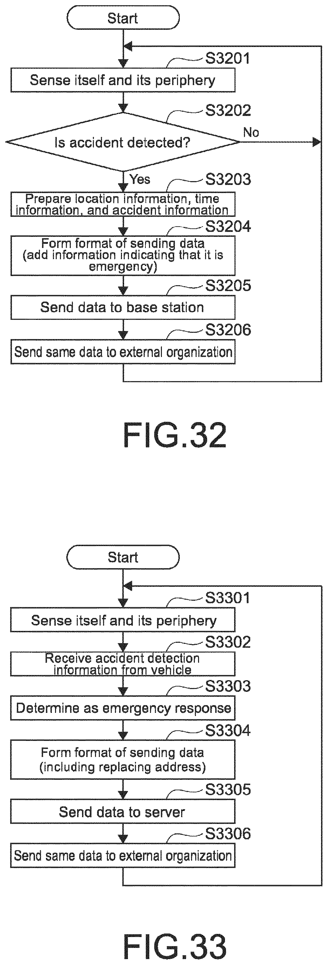

Figs. 32, 33, and 34 show examples of processing procedures of the CPU 11 functioning as the control section of each of the server 300, the gateway 200, and the sensor 100 in the present embodiment.

In Fig. 32, the sensor 100 senses the own apparatus and its periphery (S3201). When the sensor 100 detects the accident event during sensing (S3202, Yes), the sensor 100 prepares the information for transmitting the location information, time information, and the accident information to other apparatuses (including server 300, gateway 200, other sensor 100, and external organization) (S3203). Next, the sensor 100 forms the format of the sending data (S3204). At this time, the sensor 100 forms the format to which information indicating it is the emergency is added. Next, the sensor 100 sends the formatted sensing data to the upper node of the gateway 200 (S3205). Before and after this, the same data may be sent to the external organization (S3206).

In Fig. 33, the gateway 200 senses the own apparatus and its periphery (S3301). The S3301 may be performed in a case where the gateway 200 also has the function of the sensor 100. Next, the gateway 200 receives information (location information, time information, accident information) about the accident detected from the sensor 100 (vehicle) (S3302). The gateway 200 may also receive the accident detection information from each of the plurality of sensors 100.

Next, the gateway 200 determines that an emergency response is needed on the basis of the information indicating that it is the emergency included in the accident detection information (S3303). Unlike the second embodiment, the gateway 200 determines not to perform processing such as the data analysis, the compression, and the averaging.

Next, the gateway 200 forms the format of the sending data in order to transmit the location information, the time information, and the accident information to other apparatuses (including server 300, upper node of gateway 200, and external organization) (S3304). At this time, the gateway 200 may form a format to which information indicating that it is the emergency is added.

In the present embodiment, the gateway 200 does not perform substantial processing on the data sent from the sensor 100, but performs data processing such as replacing the destination address in the data in the format formation in S3304.

Next, the gateway 200 sends the formatted sensing data to the server 300 (S3305). Before and after this, the same data may be sent to the external organization (S3306).

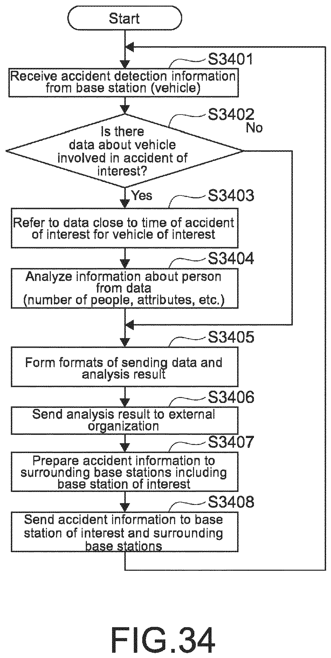

In Fig. 34, the server 300 receives the accident detection information from the gateway 200 (base station) and/or the sensor 100 (vehicle) (S3301). Next, the server 300 determine whether or not there is data about the vehicle involved in the accident according to the notification of interest (S3302). If present, the server 300 refers to data close to the time of the accident of interest for the vehicle of interest (S3403). Next, the server 300 analyzes the information about the person (number of people, attributes, etc.) from the data.

Next, the server 300 forms the formats of the sending data and the analysis result in S3004 (S3405). Next, the server 300 sends the formatted analysis result to the external organization (S3406). Next, the server 300 prepares the accident information to the surrounding base stations including the base stations of interest relating to the gateway 200 (base station) to which the accident detection information is sent (S3407). Next, the server 300 sends the accident information to the base station of interest and the surrounding base stations (S3408).

In the above processing procedure, unlike in the first embodiment, in the present embodiment, the collection is performed without the compression by the hash function which takes time to decompress. This makes it possible to immediately use the information in the vehicle involved in the accident. Note that, after the collection by the server 300 and after a predetermined time has elapsed, it may be compressed by the server 300 to save storage.

According to the present embodiment, since it is determined that the gateway 200 is in the emergency and the information is transmitted to the server 300 without processing the data, it is possible to quickly share the information about the accident in the entire system 1.

### 4. Fourth embodiment

In the first to third embodiments described above, it is assumed that the gateway 200 does not move. However, examples of gateway 200 are not limited to non-moving ones, and mobile base stations and portable base stations may also be used. It is also contemplated that the gateway 200 may use a so-called tethering technique. Therefore, a case in which the gateway 200 accompanies the movement will be disclosed below as a fourth embodiment.

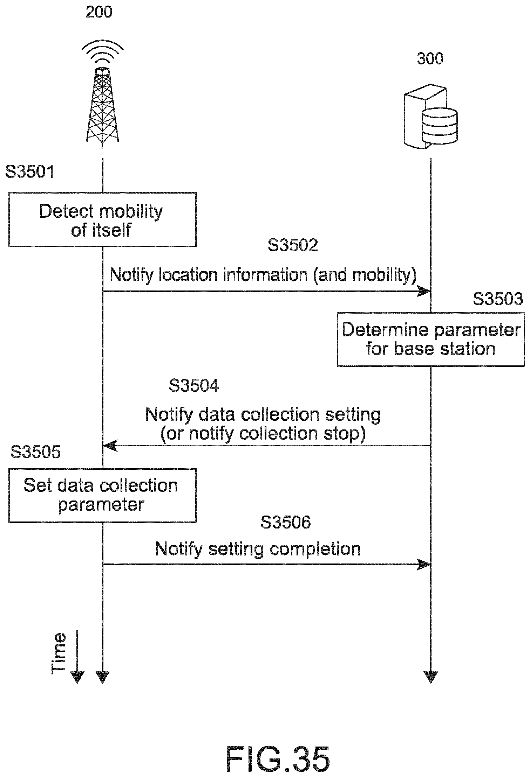

Fig. 35 is a first diagram for explaining the setting phase in the present embodiment. As shown in Fig. 35, the gateway 200 constantly detects the mobility of the own apparatus (S3501). Examples of the mobility include an amount of change in an absolute position, the speed, and the like. If the mobility exceeds a predetermined threshold, the gateway 200 notifies the server 300 of the location information and the mobility (S3502).

Next, the server 300 determines the parameters for the gateway 200 that notifies the location information (S3503). Next, it notifies the parameter, i.e., the data collection setting in the present embodiment, determined by the server 300 (S3504). Alternatively, the server 300 may notify the moving gateway 200 to stop the data collection. Next, the gateway 200 sets the data collection parameter to the own apparatus (S3505). Next, the gateway 200 notifies the server 300 of the setting completion (S3506).

Thus, in the present embodiment, in a case where the movement equal to or larger than the predetermined threshold value occurs, the gateway 200 notifies the server 300 of the movement. The server 300 notifies the gateway 200 on which the movement occurred that the data collection setting is updated. In this way, the setting parameters can be appropriately set even when the gateway 200 itself moves in the system 1. It should be noted that the server 300 may be configured to assume that reliability (stability) of the data collected therein is low if the base station accompanies the movement.

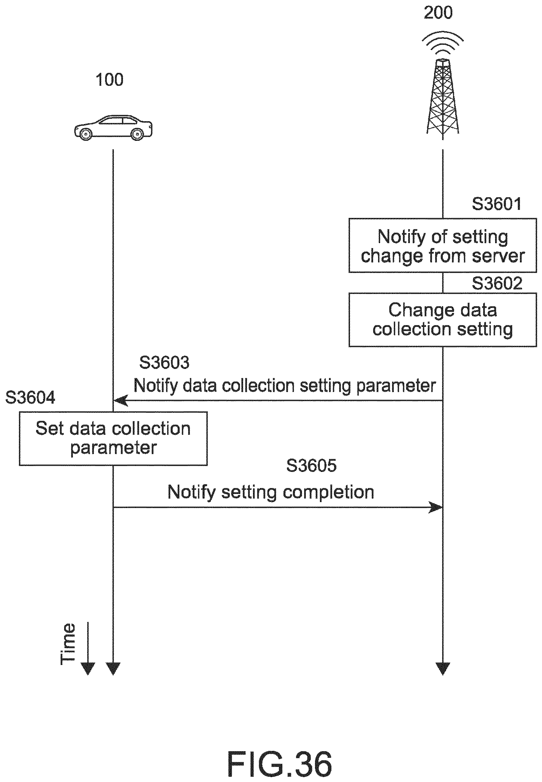

Fig. 36 is a second diagram for explaining the setting phase in the present embodiment. The moveable gateway 200 receives a notification of a setting change from the server as it moves (S3601). Next, the gateway 200 changes the data collection setting (S3602). Next, the gateway 200 notifies the sensor 100 of the data collection setting parameter and transmits the parameters to the sensor 100 (S3603). The sensor 100 sets the data collection parameter to the own apparatus (S3604). The sensor 100 notifies the gateway 200 of the setting completion (S3605).

Thus, in the present embodiment, the base station (gateway 200) notifies the vehicle (sensor 100) that makes the connection request of the data collection parameter specified by the server 300. Note that the base station (gateway 200) may perform the additional data collection setting in addition to the setting specified by the server 300. However, the setting contrary to that specified from the server 300 is not permitted. With respect to the parameter setting change, only a difference from the previous time may be notified.

### 5. Fifth embodiment

In the first to fourth embodiments described above, the timing of changing the data collection parameter setting in the gateway 200 is set when the setting parameters are specified from the server 300. However, the present technology is not limited to this. An embodiment in which the gateway 200 changes (resets) the data collection parameter setting in response to a change in the number of subordinate sensors 100 is disclosed below as a fifth embodiment.

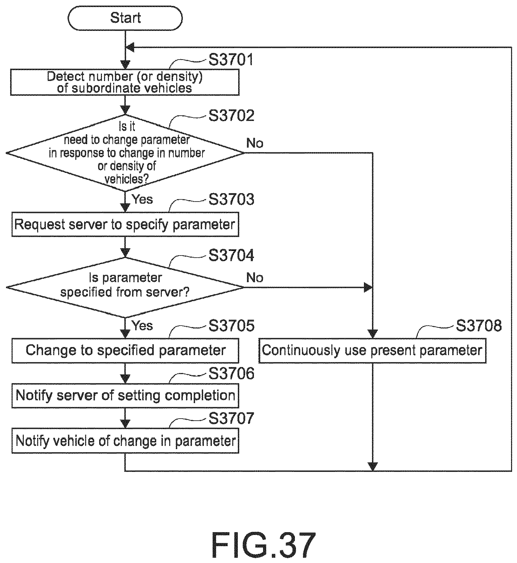

Fig. 37 shows an example of a processing procedure of the gateway 200 according to the present embodiment. In Fig. 37, the gateway 200 detects the number or density of subordinate vehicles (sensor 100) (S3701). Next, the gateway 200 determines a necessity of a change in the parameters in response to the change in the number or density of the detected vehicles (S3702). If it is determined that it is unnecessary, the gateway 200 allows to continuously use the present parameters as the setting parameters used by the sensor 100 (S3708).

On the other hand, if it is determined that it is necessary, the gateway 200 requests the server 300 to re-specify the parameters (S3703). If the parameters are specified from the server 300 (S3704, Yes), the gateway 200 changes to the specified parameters (S3705). Next, the gateway 200 notifies the server 300 of the setting completion (S3706). Next, the gateway 200 notifies the respective subordinate sensors 100 of the change in the parameters (S3707).

In the present embodiment, the number of subordinate sensors 100 may be, but is not limited to, the number of sensors 100 connected to the gateway 200. The density of the subordinate sensors 100 may be, but is not limited to, the number of sensors 100 for unit area of a communicable area of the gateway 200.

In the present embodiment, the gateway 200 determines the necessity of the change in the parameters in response to the change in the number and density of the detected sensors 100 (vehicles). Specifically, the gateway 200 determines that it is necessary to change the parameter, when the number and density of the detected sensors 100 (vehicles) exceed the predetermined threshold value or when an increase rate of the number and density of the detected sensors 100 (vehicles) exceeds a threshold value of a predetermined increase rate.

The CPU 11 functioning as the control section of the gateway 200 recognizes the change in a moving state of the sensor 100 as the occurrence event and re-specifies the setting parameters of the subordinate sensors 100 in response to the occurrence event. In addition, the CPU 11 may switch the necessity of processing (processing/not processing) of the sensing data in the own apparatus.

In relation to the parameters to be re-specified, for example, the frequency of data collection may be decreased as the number of vehicles increases. Also, when the number of vehicles decreases, the frequency of data collection may be increased. With this configuration, it becomes possible to flexibly deal with the load on the predicted network and resources.

According to the present embodiment, information collection will be performed immediately in response to the change in the moving state of the mobile body (including movement of predetermined distance or more, movement at predetermined speed or more, and change in dense state of the number of sensors).

A flowchart of Fig. 37 is an embodiment in which the gateway 200 requests the server 300 to change (reset) the data collection parameter when the number of vehicles is changed, but the present technology is not limited to this embodiment. As another example, the gateway 200 may change (reset) the data collection parameter of the subordinate vehicle by the determination of the gateway 200 without making a request to the server 300. In this case, autonomous processing of the gateway 200 is performed to reduce the load on the server 300.

### 6. Other Embodiments

The present technology is not limited to the above-described embodiments, and various modified embodiments are possible. In any of the above-described embodiments, the lower node of the gateway 200, i.e., the sensor 100 as a sensor device of the system 1, is mounted on the vehicle (mobile body) is disclosed, but it is needless to say that the present technology is not limited thereto.

The sensor 100 may take a form of a surveillance camera, for example. In this case, the sensor 100 does not move, but may collect moving images as sensing data. Also, in this case, it can be configured such that the sensor 100 successively compresses the moving images, transmits only a picture frame of the compressed moving images to the gateway 200, and determines the necessity of processing on the basis of the picture frame received by the gateway 200.

In this case, when processing the sensing data, the gateway 200 may detect a person in the picture frame by image processing, and transmit only information about the number of persons to the server 300.

On the other hand, when the gateway 200 detects a suspicious person by the similar image processing, and such detection is successively detected from the sensing data transmitted from a predetermined number and/or density of the sensor 100, it may be determined that the processing is unnecessary, and the sensing data from the sensor 100 may be transmitted to the server 300 without the processing.

According to the embodiment configured as described above, a system for monitoring a congestion state of a passage or the like in a normal state can be obtained, and a system for automatically switching to a system for monitoring the suspicious person in the emergency can be realized. Thus, the present technology is not limited to the above-described embodiments, and can be implemented by variously modifying the above-described embodiments.

Note that the information processing disclosed above can be provided by a software program. As a mode of providing such a program, the program may be provided by a magnetic or optic recording medium, or may be provided by downloading through a telecommunication line.

### 7. Appendix

The present technology may also take the following configurations.
(1) An information processing apparatus configured to allow intercommunication between a server and a sensor via a network, including:
   a communication section that transmits a setting parameter of the sensor to the sensor, receives sensing data of the sensor sensed on the basis of the setting parameter, and transmits the sensing data to the server; and
   a control section that determines whether or not processing of the sensing data is necessary before the sensing data received from the sensor is transmitted to the server.
(2) The information processing apparatus according to (1), in which
   the control section determines whether or not the processing of the sensing data is necessary before the sensing data is transmitted to the server depending on the sensing data.
(3) The information processing apparatus according to (1) or (2), in which
   the communication section transmits the setting parameter for initial setting or resetting to the sensor when receiving a connection request from the sensor to the information processing apparatus.
(4) The information processing apparatus according to any of (1) to (3), in which
   a plurality of the sensors is included, and
   the control section updates the setting parameter in response to a change in the number and density of a plurality of mobile bodies on which the sensors are placed.
(5) The information processing apparatus according to any of (1) to (4), in which
   the communication section selects a manner of transmitting the setting parameter to the sensor from the manner of transmitting at least including a unicast manner and a broadcast manner depending on a type of the setting parameter.
(7) The information processing apparatus according to any of (1) to (6), in which
   the control section compresses the sensing data by a hash function in a case where the sensing data is processed.
(8) An information processing method, including:
   configuring an information processing apparatus so as to intercommunicate between a server and a sensor via a network;
   transmitting a setting parameter of the sensor to the sensor;
   receiving sensing data of the sensor sensed on the basis of the setting parameter;
   determining whether or not processing of the sensing data received from the sensor is necessary; and
   transmitting the sensing data to the server.
(9) A program executed by a computer, the program causing the computer to execute:
   a step of configuring the computer so as to intercommunicate between a server and a sensor via a network;
   a step of transmitting a setting parameter of the sensor to the sensor;
   a step of receiving sensing data of the sensor sensed on the basis of the setting parameter;
   a step of determining whether or not processing of the sensing data received from the sensor is necessary; and
   a step of transmitting the sensing data to the server.

### Reference Signs List

- 1: system
- 11: CPU
- 12: ROM
- 13: RAM
- 15: input/output interface
- 16: display section
- 17: operation reception section
- 18: storage section
- 19: communication section
- 100: sensor
- 200: gateway
- 300: server

## Claims

1. An information processing apparatus configured to allow intercommunication between a server and a sensor via a network, comprising:
a communication section that transmits a setting parameter of the sensor to the sensor, receives sensing data of the sensor sensed on a basis of the setting parameter, and transmits the sensing data to the server; and
a control section that determines whether or not processing of the sensing data is necessary before the sensing data received from the sensor is transmitted to the server.

2. The information processing apparatus according to claim 1, wherein
the control section determines whether or not the processing of the sensing data is necessary before the sensing data is transmitted to the server depending on the sensing data.

3. The information processing apparatus according to claim 1, wherein
the communication section transmits the setting parameter for initial setting or resetting to the sensor when receiving a connection request from the sensor to the information processing apparatus.

4. The information processing apparatus according to claim 1, wherein
a plurality of the sensors is included, and
the control section updates the setting parameter in response to a change in a number and density of a plurality of mobile bodies on which the sensors are placed.

5. The information processing apparatus according to claim 1, wherein
the communication section selects a manner of transmitting the setting parameter to the sensor from the manner of transmitting at least including a unicast manner and a broadcast manner depending on a type of the setting parameter.

6. The information processing apparatus according to claim 1, wherein
the control section compresses the sensing data by a hash function in a case where the sensing data is processed.

7. An information processing method, comprising:
configuring an information processing apparatus so as to intercommunicate between a server and a sensor via a network;
transmitting a setting parameter of the sensor to the sensor;
receiving sensing data of the sensor sensed on a basis of the setting parameter;
determining whether or not processing of the sensing data received from the sensor is necessary; and
transmitting the sensing data to the server.

8. A program executed by a computer, the program causing the computer to execute:
a step of configuring the computer so as to intercommunicate between a server and a sensor via a network;
a step of transmitting a setting parameter of the sensor to the sensor;
a step of receiving sensing data of the sensor sensed on a basis of the setting parameter;
a step of determining whether or not processing of the sensing data received from the sensor is necessary; and
a step of transmitting the sensing data to the server.
